# EUROPEAN PATENT SPECIFICATION

(11) **EP 0 854 843 B1**
(45) Date of publication and mention of the grant of the patent: **21.12.2005**
(21) Application number: 96920628.3
(22) Date of filing: 21.06.1996
(51) Int. Cl.: C02F 3/12, C02F 3/20, C02F 3/30

(54) **CONTROLLING WASTEWATER TREATMENT BY MONITORING OXYGEN UTILISATION RATES**
ABWASSERBEHANDLUNGSÜBERWACHUNG DURCH BESTIMMUNG VON SAUERSTOFFVERBRAUCHSRATEN
TRAITEMENT DE CONTROLE DES EAUX USEES PAR SURVEILLANCE DES TAUX DE CONSOMMATION D'OXYGENE

(30) Priority: 22.06.1995 AU PN371195; 26.10.1995 AU PN620795
(43) Date of publication of application: 29.07.1998
(73) Proprietor: Bisasco, Pty. Limited, Hamilton South, NSW 2303 (AU)
(72) Inventor: GORONSZY, Mervyn, 5071 Siezenheim (AT)
(74) Representative: Matschnig, Franz
(86) International application number: PCT/AU1996/000379
(87) International publication number: WO 1997/000832

(56) References cited:
- EP-A- 0 069 353
- EP-A- 0 683 139
- AT-A- 335 382
- DE-A- 2 838 621
- GB-A- 1 263 753
- US-A- 3 342 727
- US-A- 3 994 802
- US-A- 4 159 243
- US-A- 4 818 408
- PATENT ABSTRACTS OF JAPAN, C-96, page 11; & JP,A,56 161 892 (HIROSHI KISHI) 12 December 1981.
- PATENT ABSTRACTS OF JAPAN, M-82, page 108; & JP,A,54 120 952 (TOKYO SHIBAURA DENKI K.K.) 19 September 1979.
- PATENT ABSTRACTS OF JAPAN, C-169, page 20; & JP,A,58 043 290 (HITACHI PLANT KENSETSU K.K.) 12 March 1983.
- PATENT ABSTRACTS OF JAPAN, C-138, page 89; & JP,A,57 144 089 (HITACHI PLANT KENSETSU K.K.) 6 September 1982.
- PATENT ABSTRACTS OF JAPAN, C-620, page 142; & JP,A,01 104 395 (HITACHI PLANT ENG. & CONSTR. CO. LTD) 21 April 1989.
- DERWENT ABSTRACT, accession no. 92-164348/20, Class D15; & JP,A,04 104 896 (UNITIKA LTD) 7 April 1992.
- DERWENT ABSTRACT, accession no. 86-002061/01, Class D15; & HU,A,TO35 614 (KELETMAGYARORSZAGI) 29 July 1985.
- DERWENT ABSTRACT, accession no. 80-43581C/25, Class D15; & DE,A,28 52 546 (MENZEL & CO GMBH) 12 June 1980.

## Description

This invention relates to improvements in wastewater treatment generally and in particular to wastewater treatment methodology using micro-organisms and means of controlling the metabolic activity of those micro-organisms in a variable volume activated sludge reactor which is intermittently, aerated and decanted, as described in the preamble of independent claims 1 and 19. More particularly, the present invention relates to methods and apparatus for controlling the metabolic activity of dispersed growth micro-organisms through the regulated supply of oxygen relative to in basin biomass oxygen uptake rate measurements, to achieve the beneficial result of carbon or carbonaceous material removal, as measured by COD, BOD, TOC; nitrogen removal as measured by TKN, NH₃-N, NO₂-N, NO₃-N; and phosphorous removal, as measured by PO₄ from a wastewater. The present invention finds particular application in treating domestic wastewater, industrial wastewater or a mixture thereof. The invention particularly relates to maximising the rate of removal of biologically degradable materials in a wastewater by micro-organisms by optimising the metabolic activity of the micro-organisms that are used in a single sludge reaction procedure. In so doing it is recognised that there are at least four major species or families of micro-organisms in the overall biological consortia that need to be maintained. Those micro-organisms that are generally responsible for the net removal of carbohydrate type compounds, those micro-organisms that generally oxidise nitrogen compounds to nitrate nitrogen, those micro-organisms that generally denitrify nitrate to nitrogen gas and those micro-organisms that generally participate in enhanced biological phosphorus and in the overall hydrolysis of degradable volatile solids to soluble degradable substrate. Up to 20000 individual species of micro-organisms can be contained in the overall consortia constituting the biomass.

Although the present invention will be described with reference to the treatment of industrial wastewater and domestic wastewater and to the methodology of such treatments, it will be appreciated by one skilled in the art that the invention is not limited to such applications and may be used to treat any type of biologically degradable wastewater or otherwise, and any type of waste including water or waste having the specific impurities or contaminants as discussed herein.

Conventional activated sludge processing requires detailed monitoring information on which to base process control decisions to meet treatment objectives. These analyses, which are well known to practitioners of the art, typically include BOD (total), COD (total), BOD (soluble), COD (soluble), TKN, ORG-N, NO₃-N, ortho Phosphate, total Phosphate, pH, Alkalinity for both influent and effluent streams. In basin measurements include, Dissolved Oxygen Concentration, Mixed Liquor Suspended Solids Concentration, Mixed Liquor Volatile Suspended Solids Concentration, Sludge Settled Volume, Biomass Degradable Fraction (through aerobic digestion of the biomass for 29 days). Simple parameters, incorporating the Potential Oxygen Utilisation Rate (POUR) and its actual utilisation rate are used for the automatic control and operation of a single activated sludge variable volume reactor in order to achieve a very high degree of carbon, nitrogen, phosphorus removal without sludge bulking.

US 4,663,044 describes a wastewater treatment reaction vessel operated with repeated sequences of aeration and non-aeration, wherein activated sludge is passed into subsequent absorptive reactor volumes, in order to reduce the BOD such that the effluent BOD is less than 20% of that of the influent.

Other methods of wastewater treatment using the concentration of dissolved oxygen to control the treatment process are disclosed, eg, in JP 56-161892 A, JP 57-144089 A, JP 01-104395 A, JP 58-043290 A and US 4,818,409.

According to the present invention the method includes
- monitoring the concentration of dissolved oxygen of the biomass,
- monitoring the concentration of biomass in the second zone and
- monitoring the level of a sludge blanket layer in the second or last zone,
wherein the concentration of dissolved oxygen in the biomass is monitored at a location within the waste material/microbial mix in the second zone or in a pipe through which biomass is pumped therefrom, and a utilization rate of dissolved oxygen is determined,
and wherein after completion of an effluent removal sequence, a sequence of aeration takes place during which waste material is introduced into the second zone, controlling the dissolved oxygen concentration to a value less than 3 mg/L while maintaining co-current nitrification and denitrification,
wherein the rate of use of dissolved oxygen by the biomass in the second zone (= oxygen uptake rate, OUR) is measured at the end of an aeration sequence, the measured rate being compared to the potential oxygen utilization rate (POUR), as determined by the measurement of the OUR of activated sludge with an excess of soluble substrate, in order to adjust the OUR to a setpoint oxygen utilization rate below the POUR, in accordance with the magnitude of the ratio POUR/OUR, by manipulation of the duration and/or the flow of air of the aeration sequence and the biomass concentration in the second zone.

Likewise, an apparatus according to the invention includes
- an instrument for monitoring the concentration of biomass in the second zone,
- a detector for monitoring a sludge blanket layer position in the second zone,
- a sensor for monitoring the concentration of dissolved oxygen of the biomass, at a location within the waste material/microbial mix in the second zone or in a pipe through which biomass is pumped therefrom,
and the control means is adapted to determine a utilization rate of dissolved oxygen, to operate a sequence of aeration after completion of an effluent removal sequence, where during the aeration sequence introducing wastewater into the second zone, controlling the dissolved oxygen concentration to a value less than 3 mg/L while maintaining co-current nitrification and denitrification, and to compare a rate of use of dissolved oxygen by the biomass in the second zone (= oxygen uptake rate, OUR), measured at the end of an aeration sequence, to the potential oxygen utilization rate (POUR), as determined by the measurement of the oxygen uptake rate of activated sludge with an excess of soluble substrate, in order to adjust the OUR to a setpoint oxygen utilization rate below the POUR, in accordance with the magnitude of the ratio POUR/OUR, by manipulation of the duration and/or the flow of air of the aeration sequence and the biomass concentration in the second zone.

Further preferred embodiments of the invention are described in the dependent claims.

The present invention relates to activated sludge wastewater treatment, the principal reactor of which is configured for complete-mix operation. While variable volume intermittently aerated and decanted fed-batch operation can be used as the preferred embodiment, the technique also applies to constant volume continuously aerated complete-mix operation. The keywords are fed-batch, intermittently aerated, complete-mix, reactor basin. In this invention there may be two activated sludge reactors connected by conduit pipe or other means, with or without means for flow interruption between the said reactors. The last reactor in each series of reactors is termed the principal reactor from which the biologically treated effluent is directed. It will be apparent to those skilled in the art, that the reactor may be formed as a slope walled lagoon structure, with earthen, concrete stabilised, membrane lined or concrete retaining walls, or as a conventional reinforced concrete walled vessel or as a structural steel vessel. While some shapes, and dimensioning ratios of the basins may be preferred it is important to state that any geometrically shaped vessel (square, rectangular, circular) can be operated in accordance with this invention specification.

It is well known by those experienced in the art that a number of reaction conditions need to be satisfied in order to achieve biological nitrification - denitrification and enhanced biological phosphorus removal. In particular the nitrification reaction requires an adequate supply of inorganic carbon. The removal of phosphorus by biological means requires selectivity reaction circumstances to cause the necessary micro-organisms to proliferate. Among those requirements is a substrate preferably containing volatile fatty acids and more commonly referred to as readily degradable soluble substrate. Additionally required are reaction conditions that cycle between the so called description of oxic and anaerobic. It is necessary to be more definitive when using these terms as there are degrees of anaerobicity which trigger certain biological reactions. An absence of oxygen and nitrite - nitrate is in current terminology not sufficient to describe "anaerobic" to the extent that biological phosphorus removal will take place. Anaerobic reaction conditions require a more exacting definition when applied to phased activated sludge processing whereby oxic, anoxic and anaerobic reaction conditions can be induced on a single sludge culture by relatively simple manipulation of fill and aeration sequencing. Selectivity pressures are dominated by exposure of the culture to high acetate - substrate loading pressures under sequenced anaerobic, anoxic and oxic reaction conditions. An absence of nitrate and dissolved oxygen concentration is not sufficient to define anaerobic conditions which will cause the relevant micro-organisms species to release its content of Poly P. According to conventional knowledge it is usual to describe appropriate reaction conditions in terms of a bulk liquid oxidation reduction potential (a value of EMF referenced to a standard electrode measurement of hydrogen or silver chloride). Hence this value needs to be sufficiently negative (-150mV, Hydrogen electrode reference) to ensure a degree of definable anaerobicity to ensure the phosphate release mechanism. It has been found that the ORP depletion rate from positive (oxidizing) conditions to negative (reducing) conditions is functional on the metabolic activity of the biomass at the switching oxidation reduction potential. The same metabolic activity is a function of the amount of residual intracellular storage compounds maintained in the culture. Using this description, a biomass having a high value of oxygen uptake rate in an oxidation environment will rapidly approach more negative ORP values when the oxidizing reactant (oxygen) is removed. A biomass having a lower value of oxygen uptake rate will consequently deplete its ORP at a slower rate. Biological phosphorus release occurs at a value some 250 mV more positive than the values that equate to the reduction of sulfate to sulfide. In the practice of the art, using other conventional constant volume processing, it has been necessary to define hydraulic retention time criteria as a means of ensuring appropriate reaction conditions. Through research and trial and error, a range of parameters has been found, relating to process and, simply described in terms of the actual oxygen uptake rate of the single sludge biomass that can be used to specify the reaction conditions that ensure a reliable and continued desirable process result. The application of these control parameters to the operation of the preferred embodiment provides an overall process that is less expensive than the generally accepted conventional methodology and one which is much less complex to operate. The principal parameter relates to an overall activity level of the biomass as measured by its oxygen utilisation rate (OUR) and its potential oxygen utilisation rate (POUR). Process control using these parameters enables the use of set point values which obtain the reliable removal of pollutants and nutrients and at the same time produce a biomass which has excellent solids - liquid separation properties.

The US 4,663,044 - see for example Fig. 7 of that document - discloses a three-zone reaction vessel with aeration and dissolved oxygen input into all three zones, with a cycle of operation in which influent wastewater to the initial and subsequent zones of the reactor is interrupted during the physical lowering of the liquid level, called the decant sequence. The document does not disclose features such as in-basin measurement of dissolved oxygen concentration, using a single probe means, versus time, automatic sensing and control for optimising pollutant and nutrient removal with the available constituents in the wastewater.

The JP-A-56 161 892 discloses a step-wise method of treating wastewater that has to be carried out in order to meet the nitrification and denitrification objectives of the method, comprising
- a filling step,
- followed by an aeration step,
- followed by a non aeration step during which time the activated sludge precipitates (settles) and undergoes nitrification and denitrification,
- followed by a drawing step,
with repetition of the steps. This method has the disadvantage of interacting and using available alkalinity, which if limited causes a drop in pH, plus successive domino effect problems with activated sludge settling. Similar methods are disclosed in the JP-A-54 120 952, JP-A-58 043 290 and JP-A-4 104 896.

The JP-A-57 144 089 discloses a method that requires the use of two dissolved oxygen sensors. One measures the concentration in basin as a reference point. The second serves to pump a volume off mixed liquor for a specific residence time and measures the dissolved oxygen using another sensor. The uptake rate is calculated by difference over the time of pumping. The monitored value of uptake rate is used as a set point by which to cease the operation of aeration.

According to the JP-A-01 104 395, a batch sample of sludge is exported to a separate collecting vessel. The separate vessel is aerated and mixed, aeration is stopped and continued to be agitated and dissolved oxygen measured with time for calculation of an oxygen uptake rate, multiple measurements of uptake rate or a sludge can be taken this way. This method transfers a sample of sludge to another reactor and exposes it to a different oxygen concentration reaction environment. The document does not disclose measurement of said oxygen uptake rate by interruption of the air supply in the process reactor, but in an additional container connected by pump means by which to simulate an aeration transfer and an oxygen uptake relative to the condition of to the condition of the sludge in the process reaction basin.

The EP 0 069 353 A describes the control of oxygen supply to effect nitrification and denitrification. The DO buildup curve and DO decay circle is analysed to contain an oxygen variation function. This method may be appropriate where the two reactions are segregated in space or time as in a generic sequence batch reactor. These biological processes do not take place concurrently, so the technique described in that document does not apply to the present invention. In the document, no reference is made to biological phosphorous removal or the other processing elements, configurations or the like required by the present invention.

The GB 1 263 753 A describes conceptual processing of mixing the liquid material with oxygen to allow microbial growth to take place, measuring the metabolism and calculating a rate of instantaneous variation and controlling a constant rate by variation of the micro organism population to keep the effective growth rate constant; control of the mass of micro organisms by addition or subtraction of micro organisms of by varying rate of introduction of composition of the fresh liquid; measurement of amount of oxygen used by micro organisms; control of rate of introduction of oxygen. The document describes the principles of operating a wastewater treatment plant at an effective constant rate of growth. It is impractical to consider the addition of micro organisms or varying the rate and composition of the fresh liquid material. The document makes no account of the fact of having to operate at the limiting growth rate, in this case, of autotrophic organisms for nitrification. Oxygen consumption cited in this document is determined out of the actual reactor basin. No reference is made to the method of operating for nitrification, denitrification or biological phosphorous removal.

The US 4,818,408 describes conventional, constant volume, continuous flow, activated treatments, it uses a conventional constant volume reaction basin followed by a conventional unaerated, unmixed clarifier. Oxygen supply is repeatably stopped and started. Dissolved oxygen concentration in continuously monitored.

The US 3,994,802discusses a conventional continuous inflow, constant volume, activated sludge reactor with separate clarifier and return of activated sludge from the clarifier as is required by conventional configurations. Compartmentalisation of the constant volume reactor is shown (three components). The arrangement of that document is not a fed-batch reactor variable volume configuration, operated with sequence of air-on and air-off. on the other hand, it uses mixes to a considerable extent. The document discloses a minimum of three reactor compartments, wherein it is essential that the first zone is oxic, the second is anoxic, and the third oxic.

The US 3,342,727 discusses a conventional, constant volume continuous flow aeration basin with secondary settling tank with return of sludge from the secondary settling tank to the conventional aeration basin. The document does not show variable volume operation, use of the same reactor basin for biodegration as solids/liquid separation, effluent removal by moving weir decanter, biological selector zone within the reactor volume, a means for measuring an apparent specific oxygen utilisation rate in situ in the same basin and using the same biomass under in situ reaction conditions.

The HU-A-35614 refers to a simple bench scale lab approach for the conventional measurement of oxygen utilisation rate. It requires a sample to be taken and a procedure and measurement to be taken on that portion of the sludge taken out of the reaction environment in the process reactor, i.e., in an artificial environment.The determination of process parameters requires extracting a separate sample which is then subjected to reaction conditions that are not the same as in the process reactor. It is to be noted that the bench scale procedure requires separate and continued mixing for measurement.

Therefore, it is an aim of the present invention to provide a method and apparatus for treatment of wastes which alleviates the problems of existing methods and apparatus by more closely monitoring process conditions and parameters relating to the activity of the biomass, such as oxygen utilisation rates including potential oxygen utilisation rates.

According to the present invention there is provided a method of treating waste by controlling metabolic activity of micro-organisms of a biomass containing the waste so as to remove selected components of the waste prior to disposal of treated waste, characterised in that the method comprises monitoring at least one oxygen utilisation rate of the biomass in order to determine a requisite amount of oxygen to he supplied to the biomass and monitoring a period of aeration of the biomass by the oxygen so as to maintain a predetermined oxygen utilisation rate or value to achieve removal of the components.

One aspect of the present invention relates to the sizing of the activated sludge reactor(s), their mode of operation and the automatic optimisation of the amount of oxygen supplied to the reactor(s) in terms of rate and time of application by sensing the metabolic activity of the biomass in the principal reactor. This metabolic activity is sensed as the actual oxygen utilisation rate of the biomass in the principal reactor at the end of an air-on sequence. Upon interruption of the supply of air to the principal reactor, the contents therein remain in motion for up to ten minutes, the natural mixing motion increasingly decreases with time. Values of dissolved oxygen concentration are sensed and monitored at intervals of ten or twenty seconds. A minimum of ten points are taken and mathematically treated to provide a slope of best fit which best describes the initial dissolved oxygen depletion rate and hence a nominal actual oxygen utilisation rate. These data are trend plotted with cycle volume, the volumetric load, pertaining to the activity measurement plus the maximum dissolved oxygen concentration sensed during the cycle. The sensed dissolved oxygen concentration and blower speed profile is also recorded. The invention relates to the maintenance of a biomass (mixed culture of micro-organisms), through optimal oxygen input, having a selectable optimal biological activity as measured by its oxygen utilisation rate, volatile suspended solids fraction and degradable volatile suspended solids fraction as later defined. The dissolved oxygen sensor measures the in-situ biomass oxygen utilisation rate for use in controlling and regulating the input of oxygen from the air input device pump or compressor. As described with reference to the preferred embodiments, reaction conditions in this principal reactor variously sequence from air-on to air-off. An air-on sequence will typically be continuous and occurs while influent wastewater is introduced into the basin(s) then stops during which time the biomass in the principal treatment reactor settles after which supernatant clear liquid is removed from the principal process reactor. The invention operates similarly with non-continuous air on sequencing. When the effluent removal sequence is completed air and untreated wastewater is again introduced into the principal process reactor until the air sequence is again stopped. A total cycle of operation can typically be four hours, an aeration sequence will typically be two hours; other time combinations can be used. To those skilled in the art it can be easily seen that other time increments may be used. Two measurements are made. The rate of depletion of dissolved oxygen during the initial minutes after the cessation of aeration. Other intermediate rates associated with multiple aeration sequencing can also be read. A second rate is measured when the air is again turned on during which time a maximum flow rate of air is introduced into the reactor or a section of the reactor for a set time (this is a variable which needs to be set for each plant and be subject of relatively infrequent adjustment through a check calibration procedure. The rate of change of dissolved oxygen (d0₂) / dt increase and depletion, and the manner in which the biomass settles d(MLSS)/dt are related where O₂ refers to concentration of dissolved oxygen and (MLSS) refers to simple concentration of activated sludge. Both vary with time when the introduction of air to the basin is stopped. Similarly there is a time variation of both parameters during the initial period of an aeration sequence. In the preferred embodiment the principle reactor of the system is configured with diffuser grids and feed lines to provide more than one effective mixed reaction zone upon introduction of air. A minimum of one section of the principal reactor will typically be aerated at the start of an aeration sequence. Biomass from this initial aerated mixed zone is used to determine the rate of change of oxygen increase at the start of an aeration sequence. In the preferred embodiment it is possible to time select the various grid zones for aeration. In those embodiments that have a single grid assembly, the same results will be obtained through aeration of the total principal reactor volume.

A part of the invention lies in the in-basin measurement of oxygen utilisation rate in order to provide the requisite oxygen in terms of rate of supply and period of aeration, to maintain a set point oxygen utilisation rate. This in turn sets the reaction conditions for the processing of wastewater using fed-batch single sludge single reactor technology. Measurement and control is but one part of the invention. The reactor basin processing, as described by the preferred embodiment, is closely associated with the measurement aspect. Both are cognated in the present invention. It will be understood by those experienced in the art that aeration of the principal reactor for too long, in successive sequences, will quickly lead to a loss of metabolic activity of the biomass therein and a subsequent inability of that biomass to properly denitrify and to take part in the removal of phosphorus by biological mass. Over aeration of the biomass will also lead to a reduced floc aggregation and hence an undesirable increase in effluent suspended solids concentration. Continued operation outside of the desired sludge age envelope will lead to a similar consequence. Biomass oxygen utilisation rate measurement is used to fix the envelope of operating sludge age.

The present invention will now be described by way of example with reference to the accompanying drawings.
Figure 1 is a schematic view of the reactor of the present invention having a single reactor divided into two compartments;
Figure 2 is a schematic view of a reactor having a single basin configuration having a main reactor and separate auxiliary reactors;
Figure 3 is a schematic view of one form of an intra floc anoxic-denitrification model used in the present invention;
Figure 4 is a plot of biorate feed-starve set point operation;
Figure 5 is a schematic diagram showing definitive conditions of oxic, anoxic and anaerobic reaction conditions expressed in terms of bulk phase measured oxidation reduction potential;
Figures 6(a) to 6(g) are schematic views of alternative forms of the reactor showing different configurations for feed inputs and effluent outlets, including multi-split inputs and outlets.

While it will be realised by those experienced in the art, that the reaction embodiment can take a number of forms, a simple embodiment for the purposes of instruction will now be described.

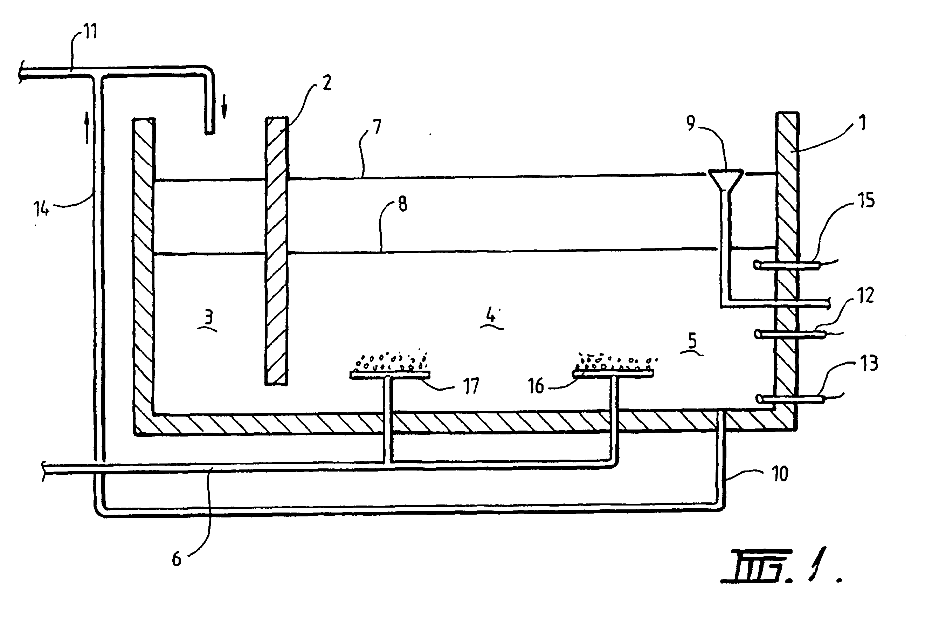

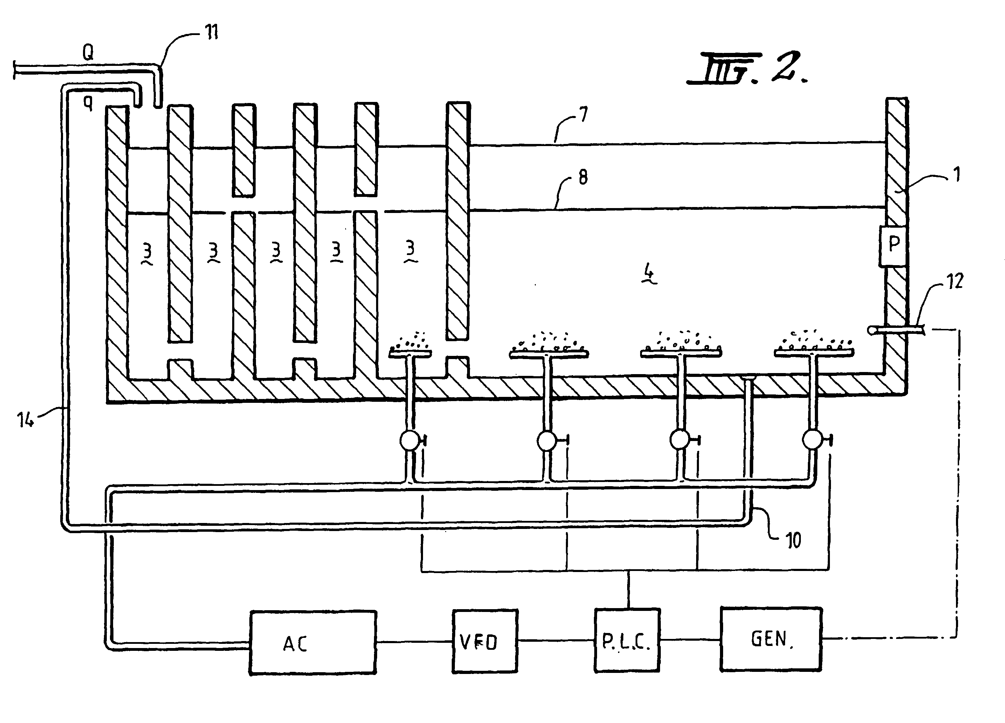

In Figure 1 is shown schematically one form of a single basin reactor of the present invention. The boundary of the reactor basin shown in Figure 1 is shown in elevation and is depicted as (1) being of solid construction and designed to contain water. Two reactor zones, shown as (3) and (4) caused by a sub compartment, partial wall, baffle wall or the like (shown as (2)), are depicted. The reactor zones are in fluid communication by pipe or other conduit or by a section of open area formed by the partial baffle wall. Means for diffusing air for the reactive oxygen component, preferably by a grid of membrane diffusers, is shown as (5) receiving a flow of compressed air from a mechanical engine shown as (6). A means for transferring the contents of (4), the principal reactor, using a regulating transfer pump to come in contact with the influent flow (designated (11)) and for its admixture and reaction in (3) is shown. Two important levels are shown in the reactor basin, that of (8), the designated bottom water level and that of (9), the designated top water level. In this embodiment a sequence of aeration takes place while flows designated (10) and (11) take place, i.e. filling from bottom water levels (8) to top water level (9). When this sequence is complete, the means of aeration are interrupted to stop the mixing and oxygen transfer procedure thus allowing the mixed solids to settle and separate to form an overlaying supernatant clear layer of liquid on top of a layer of settled solids. At an appropriate time the decanter (9) is caused to function and to remove the volumetric depth between (8) and (9), after which its functionality ceases until the end of the next cycle. In this embodiment inflow (11) may be continuous or intermittent; outflow through the operation of the decanter (9) is necessarily discontinuous relative to the total time span of the cycle that permits the operation of inflow and aeration, settle and decant. The placement of a dissolved oxygen sensor (12) either within the principal reactor (4) or within the pumped line feeding biomass from the principal reactor for admixture of influent (11) within the initial reaction zone (3), is marked 14. An instrument that can be used for monitoring the in-basin concentration of the biomass (mixed liquor suspended solids) shown as (13) may be used in the preferred embodiment. A sludge blanket interface detector (15) is also useful for automatic sludge wasting operation from the preferred embodiment. Two floor mounted diffuser grid assemblies are shown; (16) and (17) schematically show means for selectively using a grid assembly which is constituted by more than two downcomer - valve attachments. It will be seen by those that are experienced in the art that a principal reactor basin may have many more than two downcomer valve attachments, depending upon the total area of the reactor basin and the effective area of influence of the means for diffusion mixing and oxygen transfer. Reactor embodiments provide for selective and sequenced area aeration or for total area aeration.

The present invention relates to wastewater treatment methodology and means of controlling the overall metabolic activity of dispersed growth micro-organisms within a single sludge mass to achieve the beneficial result of reliable simultaneous carbonaceous removal, as measured by COD, BOD, TOC, nitrogen removal, as measured by TKN, NH₃-N, NO₂-N, NO₃-N, and phosphorus removal, as measured by PO₄, from a wastewater and within the time frame of a repetitive cycling of process events. The invention relates to means of measuring in-basin oxygen utilisation rate and manipulating aeration input to maintain a set point regime of reaction conditions that will permit single sludge single basin treatment for carbon removal and/or nitrogen removal and/or enhanced biological phosphorus removal. These reaction conditions are dependent upon a set point oxygen utilisation rate as it determines the viability of the microbial population at the set operating sludge age and is deterministic on the net settling properties of the single sludge. Wastewater may be essentially domestic or industrial or a mixture of both types.

Industrial wastewater is described as a discrete classification to differentiate from total household wastewaters which essentially comprise human wastes (faeces, urine), body washing wastewater, clothes washing wastewater and food preparation wastewater. Industrial wastewaters are essentially those wastewaters that are generated in the manufacture of products and in particular are wastewaters that are biodegradable. State-of-the-art technologies using dispersed growth micro-biological reactions have been well described in the literature, for example:
* Quirk T., Eckenfelder W.W., and Goronszy M. C., "Activated Sludge; State-of-the-Art". Critical Reviews in Environmental Control, CRC Press Vol. 15, Issue 2, 1985.
* Eckenfelder W. Wesley, Jr. "Industrial Wastewater Treatment" McGraw Hill, 1991.
* Eckenfelder W. Wesley, Jr. "Principles of Water Quality Management" C.B.I. Publishing Company, Inc., 1980.

Without limiting the coverage of the invention, reference is made to fractional components of a wastewater; the relative factions may be different in domestic and industrial wastewaters. It is important to recognise that those fractions exist and their relative magnitude can impact upon the methodology of using the invention and the process configuration in which that invention is embodied.

It is important to recognise that wastewaters typically comprise soluble and insoluble components which include readily degradable soluble organics, degradable soluble organics that are not as rapidly degradable, non degradable soluble organics, readily hydrolysable and degradable particulate substrates, slowly degradable particulate and non degradable particulate substrates. These substrates, their relative concentrations and their relative concentrations to other components such as TKN, NH₃-N, NO₃-N, total P and ortho P may have a large influence on the rate and generation of certain dispersed growth micro-organism species.
* Goronszy M.C. and Eckenfelder, W.W., "The rate of the degradation of primary solids in activated sludge plants" Proceedings Water Pollution Control Federation Conference, Toronto, Canada. October 1991.

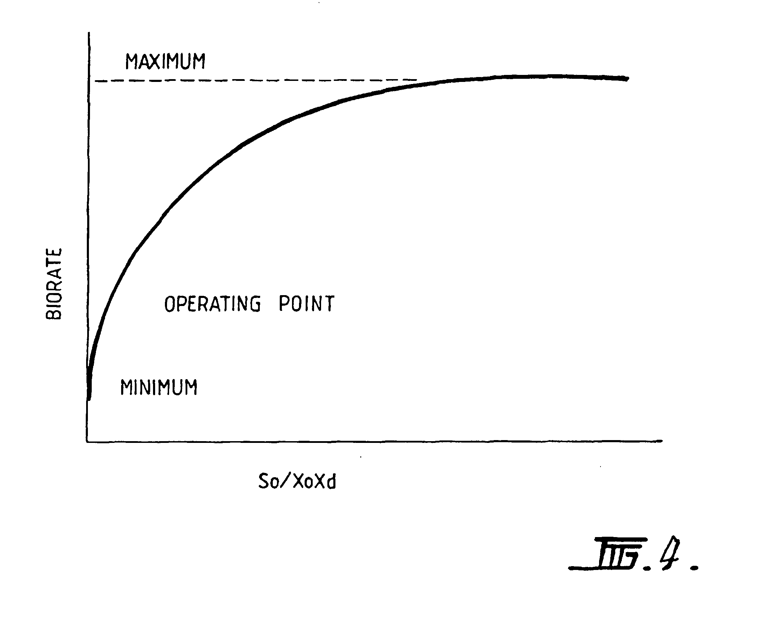

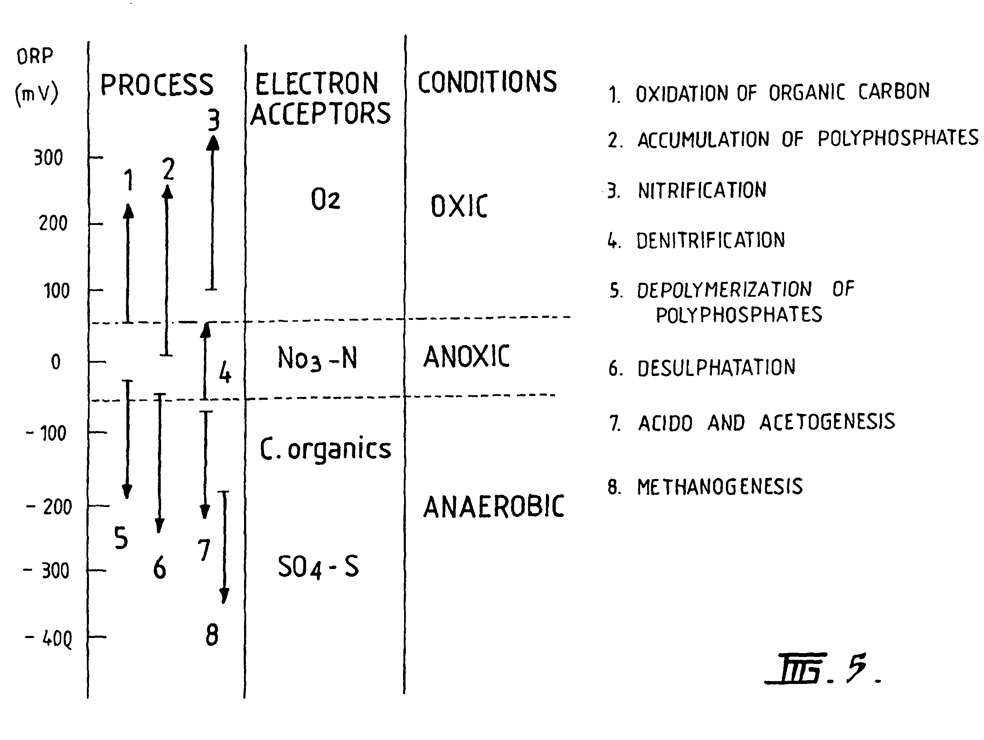

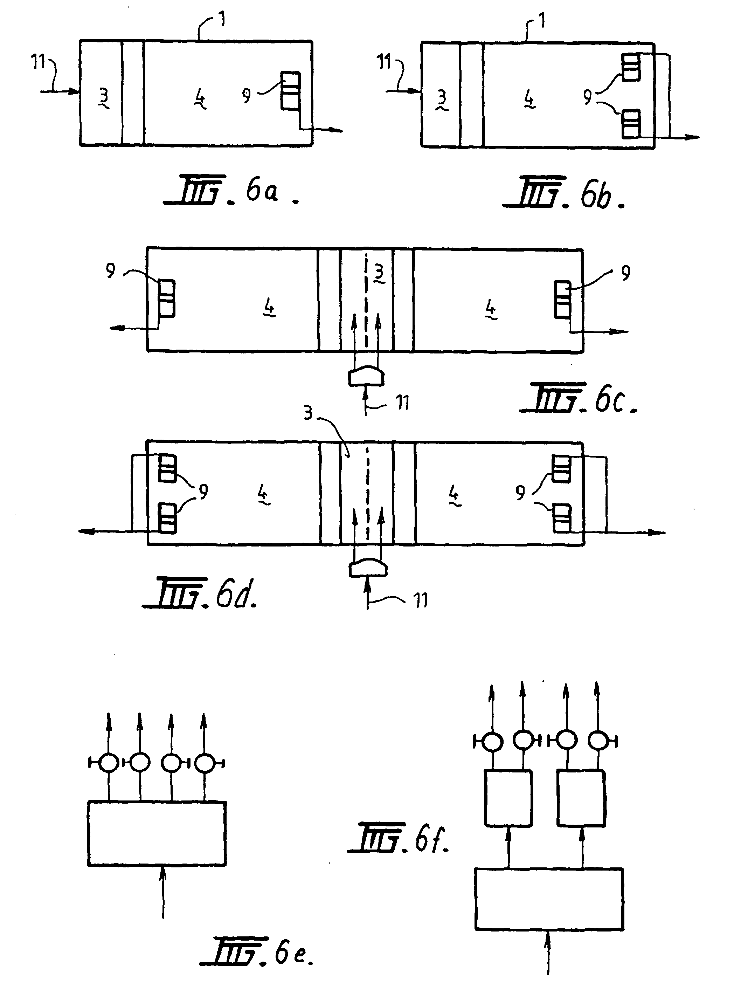

Dispersed growth wastewater treatment methodology typically involves oxic, anoxic and anaerobic reaction environments and mechanisms through which energy transformations take place involving electron acceptors to generate a net reduction in concentration of organic compounds as measured by BOD, COD, TOC and nitrogen and phosphorus (Figure 5).

These regimes of processing can be generally described in part through the concentration of dissolved oxygen, nitrite and nitrate nitrogen, sulphate, phosphate and in part through the scale of oxidation reduction potential (ORP) relative to the standard hydrogen electrode. Positive values of ORP typically relate to oxidative conditions while negative values of ORP typically relate to reducing conditions. There is no defined relationship between ORP and dissolved oxygen concentration on the positive scale, although the input of oxygen as a chemical source of oxygen will cause a response in ORP to be less negative or more positive. Temperature can influence the relative value of ORP as can the presence and relative density of micro-organism species. Essentially the removal of carbon compounds and TKN compounds requires aerobic conditions, the removal of NO3-N, and NO2-N requires anoxic to anaerobic conditions and the removal of P requires oxic-anoxic and anaerobic conditions with cyclic exposure of the biomass, or specified fractions of the biomass in the aeration basin, to achieve ORP reaction environments that vary between circa 50mV to -150mV (hydrogen electrode reference) to enable all of the processing reactions to take place. The understanding of the actual discrete mechanisms, while being important to treatment results is not important to the description of the preferred embodiment of the invention herein.

Suffice to say there are reaction regimes herein which provide an envelope of performance which is necessarily required to permit the single sludge removal of the herein beforementioned parameters. Typical domestic wastewaters are described by 24 hour flow weighted composite samples in which the measured parameters of total COD, TKN, Phosphorus are up to 1000 mgL⁻¹, 85 mgL⁻¹ and 15 mgL⁻¹ etc.

**TABLE 1**

| **Concentrations of Selected Constituents in Municipal Wastewaters** | | | |
|---|---|---|---|
| Constituent | Concentration (mg/L) related to wastewater strength | | |
| | **Strong** | **Medium** | **Weak** |
| (a) BOD | 400 | 220 | 110 |
| (b) COD | 1000 | 500 | 250 |
| (c) SS | 350 | 220 | 100 |
| (d) Nitrogen | | | |
| Total | 85 | 40 | 20 |
| Organic | 35 | 15 | 8 |
| Ammonia | 50 | 25 | 12 |
| Nitrite | 0 | 0 | 0 |
| Nitrate | 0 | 0 | 0 |
| (e) Phosphorus | | | |
| Total | 15 | 8 | 4 |
| Organic | 5 | 3 | 1 |
| Inorganic | 10 | 5 | 3 |
| (f) Alkalinity (as CACO₃) | 150 | 100 | 50 |

The relative amounts of carbon, nitrogen and phosphorus indicated by literature values in Table 1 differ considerably from those required for normal biological growth as reflected in the proportion of carbon and nitrogen given by the empirical analysis for cell material - C₅H₇NO₂ - together with the fact that cells contain around 1 to 2% of phosphorus by mass. That is, carbon is present in short supply relative to nitrogen and phosphorus in raw sewage as illustrated by Table 2. This shortage is worse for settled sewage and is further compounded by the fact that about 50% of the organic carbon is oxidised to CO₂ in biological treatment.

The nitrogen and phosphorus in excess of biological requirements normally remain in the biological treatment plant effluent. The form in which these nutrients are present in the effluent may differ markedly from that in the influent.

Nitrogen is present in raw sewage mainly as organic nitrogen and ammonia, much of which results from hydrolysis of urea, a major constituent of urine. In biological treatment some of this nitrogen is incorporated into new cell growth and is removed as biological sludge while most of the remaining nitrogen may be either in the form of ammonia or, depending upon conditions in the plant, as the oxidised form, nitrate, and to a lesser extent nitrite. Some organic nitrogen also remains in the effluent, mainly in association with the effluent suspended solids.

**TABLE 2**

| **Nutrient Imbalance in Municipal Wastewaters for Medium Strength Wastewater** | | | |
|---|---|---|---|
| **Constituent** | **Relative Nutrient Proportions** | | |
| | Carbon (mg/L) | Nitrogen (mg/L) | Phosphorus (mg/L) |
| Typical Biomass (C₅H₇NO₂, & P = ^{N}/₅) | 60 | 14 | 2.8 |
| Wastewater | BODS = 220 BOD ᵤₗₜ= 323 c = 120 | NH₄-N = 25 Org.- N = 15 Total N = 40 | 10 |
| Uptake in CELL GROWTH (Net Yield = 0.5) gcellC / GwasteC | 60 | 14 | 2.8 |
| Residual Effluent Concentration (mg/L) | - | 26 | 7.2 |
| Overall Removal (96) | 100% | 35% | 28% |

Phosphorus is present in raw sewage in two major forms - organic and inorganic. There are in fact many forms of phosphorus compounds in raw wastewaters, either in solution or in suspension. Inorganic dissolved forms consist mainly of orthophosphates and condensed phosphates while the dissolved organic forms are organic orthophosphates.

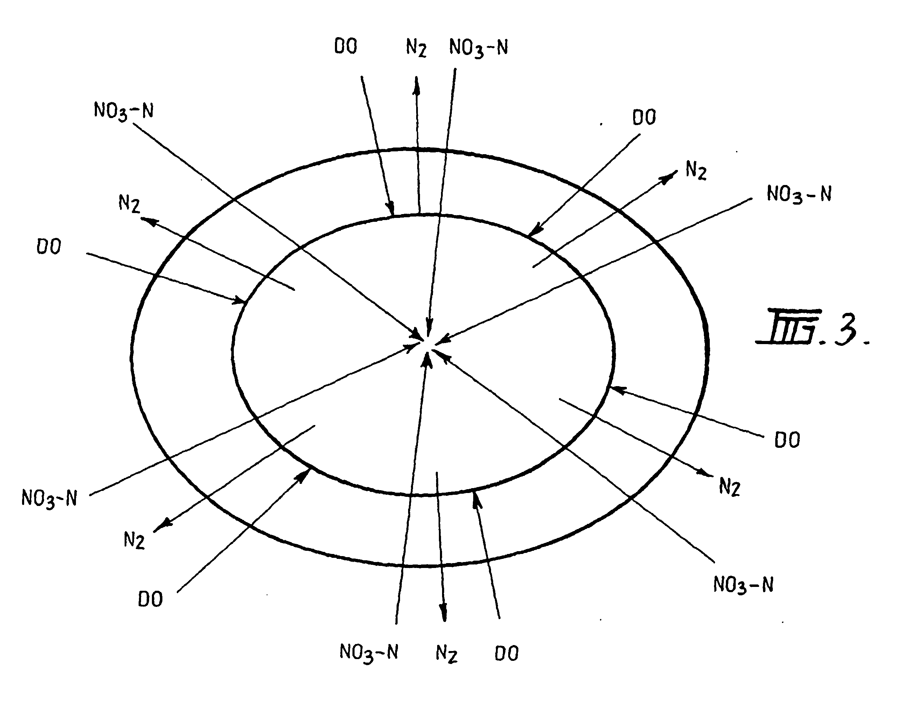

One of the specific mechanisms concerns reaction conditions which maximise the initial rate of removal and storage of the readily degradable soluble fraction of the influent wastewater flow entering the treatment plant. The treatment plant is herein described as means to receive said wastewater, means of contacting the influent flow of wastewater with the manufactured active micro-organisms, means to contain said wastewater in contact with the degrading micro-organisms to effect the envelope of performance and means for separating the said treated wastewater from the degrading and remaining micro-organisms. The envelope of performance concerns the manufacture or presence of a sufficient concentration of active micro-organisms (Xo) such that intimate contact of these micro-organisms with the influent wastewater readily degradable soluble substrate (So) causes a rapid enzymatic reaction whereby the So is transferred into the bacterial culture with the subsequent generation of PHB, glycogen and/or other intermediate 'storage' compounds within the cell structure of the reactive micro-organisms with a subsequent generation of glycocalyx (a coagulating polysaccharide compound). The transfer of substrate from the liquid phase to the solid phase is energy demanding. Under measurable oxic reaction conditions there is a rapid increase in the rate of demand for using dissolved oxygen (its oxygen utilisation rate). The energy oxygen equivalence can easily be measured by introducing a mass of dissolved oxygen to the biomass, the rate of utilisation is measured through simple dissolved oxygen versus time measurements. As the relative magnitude of the ratio So to Xo increases, the peak oxygen utilisation rate increases until a maximum or plateau value is reached. This is the first reaction envelope which also specifies a mass and rate of removal of readily degradable soluble substrates. The rate of utilisation of oxygen also parallels the rate of removal of liquid phase soluble substrate and this allows the energy inter-relationship to be formulated (Figure 3).

The measurement of degradation of a wastewater using an oxygen balance assumes that all oxygen consuming reactions involve a soluble substrate under biological growth reactions.

In a dispersed growth culture, new micro-organisms are formed as other viable cells are lost through endogenous metabolism, lysis and predation. The net active fraction of a bioculture is related to the limiting fraction of non-degradables, sludge age (MCRT) and the loss of cell viability. Reduction in the availability of food (the initial loading condition) or the over (extended) aeration of a culture having limited food availability will effectively cause a loss of microbial viability.

The transfer of dissolved oxygen to the liquid phase for use in meeting the oxygen demand of the combined wastewater and bioculture is very complex. The most important factors that need to be considered include, the water chemistry, the specific geometry and mechanism of the transfer device, basin geometry (width, length, side water depth), power input per unit volume of wetted basin, wetted depth to wetted area of basin, total dissolved solids, residual dissolved oxygen concentration, temperature, surface tension, mean diameter of air bubbles, retention time of air bubbles in liquid medium, oxygen demand of basin contents, air flow rate per oxygen transfer device, ratio of areas of air flow rate device to total basin floor area, area distribution of oxygen transfer devices, altitude, concentration of the bioculture, system sludge age, active fraction of the bioculture, mean particle size of the bioculture, bulk removal rate of dissolved oxygen by the biomass (hereinafter referred to as BIORATE).

Oxygen and its rate of utilisation, for all of the reactions taking place involving the adsorption, absorption of nutrients, their metabolism into biosolids and the subsequent degradation of biomass, is of prime importance. The provision of oxygen at an adequate rate is therefore the key element to the use of cyclic aerobic, facultative and anaerobic micro-biological treatment methodology for the net rate of removal of nutrients by oxidative and reductive means, for the net rate of accumulation bf biosolids and for the net removal of phosphates by biological means. The rate of supply of oxygen, its net residual concentration and the BIORATE, relative to the So/Xo distribution generally determines net growth factors for different groups of micro-organisms generally described as predominantly floc-forming or as filamentous forms. An overgrowth of filamentous forms is counterproductive to the treatment goals as this condition causes a disruption of the processing time scale for solids - liquid separation. It is therefore mandatory that biological growth associated with predominantly floc-forming micro-organisms. The cognation of the preferred process embodiment and the means for biomass process control based on oxygen utilisation rate set-points are directed to this objective.

The removal of nutrients by each of the mechanisms of adsorption, biosorption, oxidation and assimilation with ultimate aerobic destruction of biological solids requires different oxygen fractions. The net use of oxygen is directly related to the proportion of nutrient removal by each mechanism.

BIORATE is a function of the condition of the biomass and the nature of the soluble substrate in contact with the biomass. A single sludge system can be made to exhibit a maximum biorate and a minimum biorate depending on aeration time and the initial ratio of So/Xo. The active fraction of the biomass influences the range of biorate that its biomass will exhibit.

Data taken from a 5 series complete-mix, constant volume reactor system is presented to demonstrate typical magnitudes and changes that take place.

**TABLE 3**

| **Biorate and Associated Parameters** | | |
|---|---|---|
| **So/Xo** | **MCRT** | **Biorate I** |
| mg mg⁻¹ | d | mg O₂gvsshr⁻¹ |
| 4.0 | 1 | 147 |
| 1.0 | 2 | 90 |
| 0.5 | 3 | 66 |
| 0.25 | 8 | 56 |
| 0.21 | 15 | 43 |
| 0.21 | 40 | 35 |

For these rates the initial reactor operated with a 70 minute residence time and the total reactor 420 minutes residence time.

**TABLE 4**

| **So/Xo vs Biorate (mg O**_{**2**} **g**^{**-1**} **VSS h**^{**-1**}**)** | | | | | | | | | |
|---|---|---|---|---|---|---|---|---|---|
| So/Xo | 0.056 | 0.062 | 0.113 | 0.182 | 0.197 | 0.388 | 0.437 | 1.00 | 4.0 |
| | | | | | | | | | |
| Biorate | 35.2 | 33.1 | 43.1 | 57.9 | 56.3 | 74.4 | 70.4 | 90.0 | 147 |

Instantaneous oxygen utilisation rate can be typically measured by a bench scale method in which the time concentration measurement of dissolved oxygen depletion of an oxygenated sample of activated sludge removed from the process reactor is measured. This is a simple batch test which requires a sample to be taken from the activated sludge reaction basin, aerated, placed in a mixed reactor into which is placed a dissolved oxygen measuring sensor; ingress of air is prevented. When the dissolved oxygen meter senses oxygen depletion is taking place, measurements of dissolved oxygen versus time are taken.

Respirometry control as it is currently practised in activated sludge processing is complex and indirect. Respiration rates are measured with a meter which typically consists of a closed completely mixed respiration chamber through which activated sludge from the reacting aeration tank is continuously pumped. Dissolved oxygen concentration is periodically measured with an oxygen sensor at the inlet as well as at the outlet of the respiration chamber which can be achieved by altering the flow direction using a system of valves (as one method).

The problem with measuring the oxygen content at the inlet and outlet of the respiration chamber is that the oxygen content within the respiration chamber varies significantly from the oxygen content at the inlet and outlet of the chamber thus giving erroneous measurement.

The aim of this present invention is to provide a wastewater plant treatment and a method of treating wastewater wherein the metabolic activity of the biomass is maintained at a level to ensure a maximum rate of biological removal of nutrients by oxidative and reductive means through the measurement of BIORATE as previously specified within the principal reaction basin through measurements that occur by the sensing of oxygen concentration response changes at the end of an aeration sequence.

The wastewater treatment plant of the present invention comprises a principal reactor means capable of maintaining wastewater in contact with biologically active degrading micro-organisms, a receiving means to receive wastewater into the reactor means, an oxygen transfer means whereby air is introduced into the principal reactor, a control means for operating the said sequences and necessary equipment, an oxygen detection means to detect the relative changes in dissolved oxygen present in the principal reactor means and a control means to control the amount of oxygen introduced into the principal reactor means so that the activity of the micro-organisms is not limited by the amount of oxygen present in the principal reactor wherein the oxygen detection is within the principal reactor means.

Measured in the biomass according to the present invention there is provided an apparatus or a process using dispersed growth biological cultures for the treatment of wastewater which comprises the following in combination with each other:

A means for maintaining a maximum potential BIORATE in an initial designated unaerated reaction zone for the culture through the defined admixture of influent wastewater and biomass from the principal and final designated reaction zone, a means for introducing dissolved oxygen into the specified principal reaction zone(s) for operation under preselected area and pre-programmed aeration sequences, a means for interrupting the influent wastewater to the initial designated reaction zone, a means for removing a fraction of the supernatant clear treated wastewater after a set sequence of non-aeration, a means for detecting and measuring the position of the biosludge interface layer, a means for interacting the biosolids interface with the biosludge wasting program with the detection of the biosludge interface position, a means for setting automatic time sequences for automatic operations, a means for operation of the principal final designated reaction volume as a variable volume complete-mix unit, a means for measuring the biorate in the principal final designated reaction volume using a dissolved oxygen sensor properly placed in that basin volume, a means for measuring the rate of change of dissolved oxygen concentration and making comparison with the actual respiration rate to control the rate of introduction of dissolved oxygen into the treatment system, a means of operation for maximising the ratio of potential oxygen utilisation rate (determined through defined admixture of influent and biomass from the principal reactor) to oxygen utilisation rate in the principal reactor, a means for automatically setting the duration of the aeration sequence as measured and calculated by the actual respiration rate, a means for optimising the use of aeration power to effect nitrification and denitrification, a means of operating the system through BIORATE control to effect maximum biological phosphorus removal, a means for operating the process so that the principal final designated aeration volume operates at an approximate biological steady state actual respiration rate (corrected for active traction of biomass), a means for using the dissolved oxygen depletion rate that results from interrupting the air flow to the basin and a biomass concentration settling algorithm to provide the BIORATE parameter, a means for removing near surface supernatant liquor at from about 20cm below the liquid surface at a constant rate to equivalent liquid depths up to two metres in a preferred 5-6 metre basin depth wherein the reactor configurations permit end basin or across basin centre feed location, and the reactor configurations permit transverse or longitudinal location of effluent decanting devices, whereby the apparatus and process is used to treat wastewater.

The wastewater treatment plant consists of two reactors in fluid communication means. In one embodiment the plant consists of several reactors in fluid communication wherein different components such as nitrogen, phosphorus, carbon and the like are together accumulatively removed in different reactors. In a further embodiment the oxygen content in each reactor is significantly different.

In a particularly preferred embodiment the wastewater treatment plant comprises two reactors, a first reactor, typically unaerated whereby absorption and biological phosphorus release mechanisms take place, a second reactor which operates through cyclical oxic - anoxic - anaerobic conditions for the microbial degradation of carbon compounds and TKN compounds in a wastewater and for the microbial removal of NO₃₋N, NO₂₋N and the microbial removal of P in the wastewaters; both reactors are in fluid communication.

The oxygen detection means may be any suitable means for detecting dissolved oxygen. Preferably the oxygen detection means detects dissolved oxygen. More preferably, the oxygen detection means is an electronic oxygen sensor able to measure the rate of change of dissolved oxygen concentration as a 4 - 20 milliamp primary control signal through the use of a computer and other programmable logic controller through which output signals are generated which allow interactive control of the rate of introduction of air into the reactor according to a set concentration profile. More preferably the oxygen concentration is sensed as a result of aeration of the wastewater/microbial mix in the principal reactor.

The oxygen concentration is typically adjusted during water treatment. Preferably the concentration of oxygen in the wastewater/microbial mix is adjusted during an aeration sequence. In particular, the concentration of oxygen present is controlled by adjusting the duration of the aeration sequence and/or adjusting the flow of air in the aeration sequence. The flow of air may be controlled by a speed control mechanism on the generator of the air supply flow or in the flow of air through a position control mechanism of a suitable control valve or other means that are specific to the oxygen input device. Control of the air flow by either means results in the control of the mass rate of transfer of dissolved oxygen to the principal reactor.

The oxygen sensor is preferably located within the principal reactor itself. The oxygen sensor is located within the wastewater/microbial mix. More preferably the oxygen sensor is located around 30cm away from any surface of the principal reactor floor. Alternatively, the sensor can be located in a pipe through which biomass from the principal reactor is pumped.

In one embodiment of the present invention the oxygen sensor calculates the actual in basin oxygen uptake based on the sum of the endogenous or basic oxygen uptake and the oxygen uptake rate for oxidation of readily biodegradable substrates, such as substrates in the carbon and nitrogen form, depending upon the micro-organisms that are present and the operating sludge age of the system taking into account altitude and temperature.

Experimental work has shown a relationship to exist between the ratio of potential oxygen utilisation rate and sludge settleability, provided dissolved oxygen concentration is not limiting. A further relationship exists relative to the value of actual oxygen utilisation rate and the rate of depletion of oxidation reduction potential. The value of actual oxygen utilisation rate, over and above the endogenous oxygen utilisation rate also relates to a quantification of the mass of stored readily degradable soluble substrate remaining in the biomass and the capability of that biomass to participate in quantitative enhanced biological phosphorus removal mechanisms. An embodiment of the invention is to provide means of maintaining a mass transfer of oxygen (through aeration) which approximately equates to the biomass oxygen demand and by such means cause the aerobic degradation mechanisms to take place at an optimal use of oxygen transfer energy. Automatic means are provided for setting the length of the aeration sequence, the mass of micro-organisms to be carried in the principal reactor, setting the desirable dissolved oxygen concentration profile in accordance with the resultant set-point oxygen utilisation rate measured at the end of the aeration sequence and the magnitude of the POUR/OUR ratio.

That the embodiment of the invention is such as to cause co-current nitrification - denitrification to essentially practical completion and to provide for biologically enhanced phosphorus removal mechanisms that are well known to those experienced in the art.

In one embodiment there is one or more reactors the first receives an in fluid communication one of which is admixture of wastewater and micro-organisms contained in the mixed liquor from the last reactor.

In a preferred embodiment the invention relates to the use of a fed-batch reactor volume which is essentially operated as a completely mixed reactor during an aerated sequence, albeit of variable volume, during which time a combined flow of influent domestic wastewater and a flow of mixed liquor solids from the fed-batch reactor volume is introduced.

Even more preferably, a wastewater/microbial mix goes through a complete aeration cycle. The same mix then undergoes a non-aeration cycle, during which time a solids layer and an upper supernatant layer segregate. The sequence of events are completed through the removal of a fraction of the upper supernatant layer from the principal reactor using decanting means. The whole cycle is then repeated.

Control and measurement of the respirometric capacity of the biomass directly in the principal reactor is made possible through the complete-mix air-on and air-off operation that takes place in the preferred variable volume activated sludge treatment methodology. It is also possible to check the progress of treatment in an aerated reaction sequence through interruption of the air flow and subsequent measurement of the dissolved oxygen depletion rate.

Measurement of the end of sequence oxygen utilisation rate, combined with the comparison of received process volume (versus minimum set-point volumes) provides the basis for automatic in sequence aeration cycle adjustment which effectively increases the organic loading and hence oxygen utilisation rate as an assurance for biological phosphorus uptake, following its release during otherwise unfavourable uptake reaction conditions.

State-of-the-art on line respirometry as typically applied measures dissolved oxygen concentration in the outlet of a respirometer chamber separate from the principal activated sludge reactor, which is equal to the dissolved oxygen concentration in the respiration chamber and should not be rate limiting. If necessary the activated sludge should be aerated before it enters the respiration chamber. The respiration rate is typically measured every minute from the mass balance of dissolved oxygen over the separate respiration chamber. The actual respiration rate is defined as the oxygen uptake rate in the principal aeration tank. To measure this rate, activated sludge from the principal aerated reactor is continuously pumped into the on line separate respiration chamber which is equal to the mean actual respiration rate in the principal activated sludge reactor basin provided that the sludge loading in the respiration chamber equals the loading in the aeration tank. To maintain loading equivalence influent is continuously added to the sludge flowing into the respiration chamber in the proportion.
Qsam = Qin Vres/Vat
Qsam = influent sample flow to respiration chamber.
Qin = influent flow
Vres = volume respiration chamber
Vat = volume aeration tank

In all cases on-line respirometry is measured in a scaled down version of the organic loading conditions that exist in the main aerated reactor of an activated sludge plant. A number of simple respiration rates are so identified; the endogenous respiration rate which is typically defined as the oxygen uptake rate of activate sludge that has been aerated for 1.5 hours without feeding. The maximum respiration rate is defined as the oxygen uptake rate of activated sludge with an excess of soluble substrate (readily biodegradable matter). This rate is measured when an excess of influent is continuously introduced to the sludge flowing into the respiration chamber. The instantaneous respiration rate is defined as the oxygen uptake rate of activated sludge flowing directly from the completely mixed aeration tank through the respiration chamber. The rate is typically lower than the oxygen uptake rate in the aeration tank the actual respiration rate. The absolute value of the instantaneous respiration rate depends on the detention time in the respiration chamber. The maximum respiration rate of a biomass is also equivalent to its potential oxygen utilisation rate.

The embodiment of the present invention uses actual respirometric rate control from measurements taken within the aeration reactor (the principal reactor), not from an inline separate detection unit as is the current general practice.

The actual respiration rate in the preferred embodiment of the invention is the sum of the endogenous or basic respiration and the uptake rate for oxidation of readily biodegradable substrate, both carbon and nitrogen forms, the latter only occurring if a nitrifying biomass is selectively grown. At maximum respiration rate the activated sludge will be in an overloaded condition and will result in incomplete removal of readily biodegradable substrate. This means there is a critical respiration rate in between maximum and basic respiration rate and at this rate the effluent quality meets the requirements and the removal of readily biodegradable substrate, among other parameters is satisfactory. At no time should the oxygenation capacity be rate limiting. It is necessary that the kinetic processes that utilise dissolved oxygen be complete to within the reaction time that is provided for the completion of those reactions. In the case of nitrifying mechanisms, the transferred oxygen required by the oxygen demand must be satisfied by the oxygen supply - time relationship indicated and provided by the respiratory measurement. It is necessary to initially determine by manual means, loading rates, actual respiration rates and dissolved oxygen concentration. There is an advantage when the actual respiration rate is always equal to or near to the critical actual respiration rate. In this case the activated sludge is never overloaded and works at a maximum acceptable rate. Therefore the total amount of activated sludge maintained in the system is optimal and the metabolic activity of the biomass can be maintained at acceptable values to assist with other nutrient removal reactions. An ideal constant actual respiration rate can always be met through manipulation of biomass concentration, aeration time, and rate of supply of oxygen demand.

To those experienced in the art, there are a number of ways of operating dispersed growth wastewater treatment systems. These generally include the operation of one or more connected reactors, at constant volume at least one of which is aerated continuously, through which the admixture of wastewater and micro-organisms flow. The final basin in these systems is a "quiescent" non-aerated vessel in which solids liquid separation takes place, the clear overflow supernatant being the treated effluent and the underflow solids which are directed to waste and to the reactant vessels. Various internal recycle flows also occur. While the invention can be embodied in this configuration, it is not so limited in its application. In its preferred embodiment the invention relates to the use of a fed-batch reactor volume which is essentially operated as a completely mixed reactor during an aerated sequence, albeit of variable volume, during which time a combined flow of influent wastewater and a flow of mixed liquor solids from that reactor is introduced. Principally the volume fraction as described as the fed-batch reactor undergoes complete mix aeration, during a specific aeration cycle, for which variable volume complete mix kinetics can be ascribed to that specific volume. Following the specific non-aeration sequence, during which time a solids layer and an upper supernatant layer segregate, the relative depths being dependent upon the contact flow history of influent wastewater and the mixed liquor solids concentration of a stream of solids, which is directed from the principal variable - volume completely mixed volume to the influent stream of wastewater for admixture. This embodiment of operation requires a means of removing a specified fraction of the supernatant upper layer during the continued non-aeration sequence. When this event is completed, the aerated sequence is continued with further admixture of reactants as prescribed previously.

While not limiting the embodiment of the invention, the mode of operation of fed-batch reactor treatment methodology is most easily conducted in more than one basin module. Cycles of aeration operation can be easily set for 2 hours and other two basin multiples. Other cycles of operation can be set for 3 basins, and other additions, for either even or odd basin operation. The embodiment of the invention while not limited to the basin modules, is easily explained as a two basin operation. Those experienced in the art will be able to extrapolate from the two basin operation used in this discussion.

Whilst upstream reaction volumes have an important bearing on the efficiency of the treatment methodology, the principle requirement is that there is a major volume fraction of the fed-batch reactor volume, in excess of 50%, that undergoes variable volume complete mix reaction conditions, using a specific device for combined aeration and mixing.

While it is preferable that a system of diffused aeration is used, this does not necessarily limit the application of the invention. Two set-ups for the invention will be described. Both configurations require the use of a dissolved oxygen sensor having an acceptable response time for measuring a rate of change of dissolved oxygen concentration (do₂/dt).

Previous discussion has explained the importance of load demand and load supply of dissolved oxygen, relative to substrate load, load application time and viable fraction of biomass.

The first configuration requires the use of a suitable dissolved oxygen sensor, complete with the electronics that are necessary to enable the measurement of the rate of change of dissolved oxygen concentration as a control signal, through the use of a specific computer or other programmable logic controller, through which output signals are generated, which allow interactive control of the rate of introduction of air into the complete-mix reactor (and/or other fluidly connected reactor volumes), during the aeration sequence. Interactive control is through the duration of the aeration sequence combined with the flow of air through a speed control mechanism on the generation of the air supply or in the flow of air through a position control mechanism of a suitable control valve, as a means of restricting the flow of air. Control of the airflow by either means results in the control of the mass rate of transfer of dissolved oxygen to the complete-mix fed batch reactor.

In the first preferred embodiment the invention requires a minimum of one reactor vessel, preferably operated as a fed-batch reactor, which operates as a variable volume activated sludge reactor basin. During the process of filling and aeration where more than one vessel compartment is used, these will be in fluid communication.

An important feature of the invention is the manner and means by which the wastewater to be treated is introduced into the means for reaction. Also important is the initial mass ratio of activated sludge solids that is caused to come into contact with the influent waste flow. Of further importance is the time of interaction of these component flows and the means by which intermixing and intermeshing of the two flow streams is maintained. One method employed in the industry utilises either fixed sub surface or floating surface electrically operated propellers which cause a directional flow to take place and an intermixing of solids and liquid phases through the expenditure of energy. The invention can be used with this means of operation. The preferred embodiment of the invention contains no specially installed equipment of the type referred to. Mixing in this invention is variously caused through the operation of the means for aeration, which is essential to the aerobic degradation and anoxic degradation processes that are maintained and or the design of combined flow conditions using conduits, channels and flow directional baffles.

It has been found that there are benefits in process that derive from the means of introducing the relative proportions of activated sludge solids and wastewater, the time of flow-mixed contact of these two streams and the manner in which kinetic natural mixing is used during the initial contacting reaction period. While not omitting the application of the invention, the combined initial reaction time is designed to ensure a minimum of 65% removal of the readily degradable soluble substrate fraction contained in a wastewater. This fraction can be variable in wastewaters. By way of example, for a BOD of around 300 mg/l, and an associated COD of around 600 mg/l, in a domestic wastewater, and for a typical reticulation design, a 25% readily degradable soluble substrate fraction assumption base will give acceptably good process results. A process reaction time of twenty to around sixty minutes hydraulic retention time within the biological selector will normally generate the desired result, provided the compartmentalisation required of the inlet configuration design performs with the correct degree of dispersion together with an appropriate mixing energy that enhances biological floc nucleation and aggregation. The relative placement of overflow and underflow baffles relative to designated bottom water level and the reactor basin floor is a feature of the invention. The open area of the underflow baffle is restricted to generate a high underflow energy which is more than three times greater than the mean flow energy across the overflow weir. The underflow free area uses a fraction of the available length of the underflow baffle. Thus high mixing energy regimes are generated near to the reactor basin floor sections which are followed by reduced energy fluctuation - aggregation zones at the upper zone, formed by the overflow baffles. The inlet configuration geometry is designed to promote pulsed energy zones which ensure floc transport and floc growth, together with the biological reactions of soluble BOD removal and conversion to intracellular storage products, partial denitrification and phosphorus release by the biological phosphorus sequestering micro-organisms that are caused to grow in the biomass.

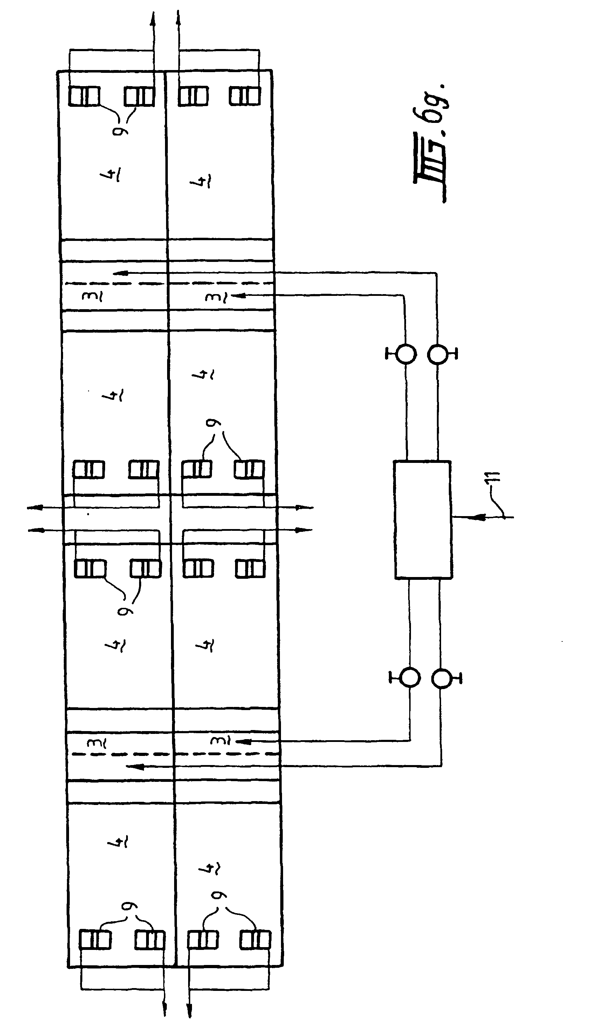

While all of the processes referred to above take place in a single vessel embodiment, a preferred embodiment utilises a four (4) basin facility or a four (4) module facility. Each module can comprise one (1) to N (where N ≥ 1) basin combinations. The factoring on 4 modules is dependent on the set (design) four (4) hour cycle upon which the basin geometry is designed. To those experienced in the art it is obvious that other factoring numbers such as 3 and 5 can equally be used. Such design satisfies specific requirements for load (hydraulic) division, organic load manipulation, biological treatment (including concurrent nitrification-denitrification and biological phosphorus removal) provision of oxygen demand by automatic biorate control, maximisation of oxygen transfer efficiency, optimisation of solids-liquid separation relative to the decant depth and decant removal rate of treated effluent. The four module preferred embodiment operates in every way as a net continuous process, with acceptance of influent on an as received basis with a continuous discharge of effluent from the plant, the flow rate being an hourly constant rate relative to the actual decant volume that is removed from each module. A different protocol can be run whereby the discharge rate is constant at each decant sequence. The preferred embodiment is configured for a flow split operation followed by the four module (basin) processing. A module can be configured with influent at one end of the module (basin) and effluent decanting at the opposite end or with effluent decanting at the remote end of the module (basin) but located on the long basin walls (see Figures 6(a) to 6(g)). Typically a domestic wastewater containing 300 mg/l TSS, 55 mg/l TKN which is to be treated to a flow range of 6 x ADWF will require an inlet configuration zone of up to 8% of the total vessel area. This zone is divided into a minimum of 5 and typically between 8 and 14 sub zones for each principal reactor each having a volume fraction that initially generates an oxygen uptake rate in the first mixed zone of in excess of 20mg O₂/gVSS/hr. The volume fraction of mixed liquor suspended solids from the main reactor volume will typically be in excess of 20% and less than 33% of average influent flow. Under overflow baffle arrangement terminates on either side of the reactor basin such that half of the combined flow discharges to a position on either side of the principal reactor basin.

Pumped mixed liquor suspended solids continues throughout the duration of the complete cycle. Influent wastewater is interrupted during the settle sequence. Waste sludge is collected from zone subsequent to the inlet configured biological selector, and removed during an aeration sequence or during the non-aeration settle sequence. Reactor basin dimensioning is typically based on up to 15kg HLSS/m² of reactor area; and for efficient nutrient removal in domestic wastewater, a BOD load of 0.33-0.40 kg BOD/m³ at a fractional decant volume of 0.46. Decant liquid depth removal is up to 38mm/min. without the addition of phosphorus precipitant. With the addition of phosphorus precipitant, for normal dry weather treatment operation this depth rate can be increased to 44mm/min. Basin solids flux load is up to 15kg MLSS/m² and up to 10kg TKN/kg MLSS/m²/d, within 20% for the former and within 30% for the latter.

It will be obvious to those experienced in the art that the same mode of operation and control applies to the treatment of wastewaters for carbon removal only, for carbon and nitrogen removal, for carbon and phosphorus removal and for carbon and nitrogen and phosphorus removal.

Those skilled in the art will appreciate that the invention described herein is susceptible to variations and modifications other than those specifically described. It is understood that the invention includes all such variations and modifications which fall within the scope of the invention as laid down in the claims.

## Claims

1. A method of treating waste material by controlling metabolic activity of micro-organisms of a single activated sludge biomass, by controlled aeration combined with intermittent aeration cycling and intermittent decantation of treated effluent, in a two-zone reactor (1) operated with variable volume, said reactor being open to the atmosphere and comprising a first zone (3) having an unaerated reaction volume and, partially separated from the first reaction zone in series connection, a second zone (4) having a cyclically aerated reaction volume and comprising means for introducing dissolved oxygen by controlled aeration, both zones having a common maximum top water level (7),
to remove organic carbon, nitrogen and phosphorus containing components from the waste material,
the method comprising:
- admitting waste material to the reactor (1),
- transferring at least a part of the contents of the second or last zone to the first zone (3) for admixture and reaction therein with incoming untreated waste material, and contents flow from the first zone to the second zone, said transfer occurring while at least the second zone (4) is being aerated, and
- interrupting the flow of waste material into the first zone (3), while a supernatant forms and treated effluent is removed from the second zone,
**characterised in that** the method includes
- monitoring (12) the concentration of dissolved oxygen of the biomass,
- monitoring (13) the concentration of biomass in the second zone and
- monitoring (15) the level of a sludge blanket layer in the second zone,
wherein the concentration of dissolved oxygen in the biomass is monitored at a location within the waste material/microbial mix in the second zone or in a pipe through which biomass is pumped therefrom, and a utilization rate of dissolved oxygen is determined,
and wherein after completion of an effluent removal sequence, a sequence of aeration takes place during which waste material is introduced into the second zone, controlling the dissolved oxygen concentration to a value less than 3 mg/L while maintaining co-current nitrification and denitrification,
wherein the rate of use of dissolved oxygen by the biomass in the second zone (= oxygen uptake rate, OUR) is measured at the end of an aeration sequence, the measured rate being compared to the potential oxygen utilization rate (POUR), as determined by the measurement of the OUR of activated sludge with an excess of soluble substrate, in order to adjust the OUR to a setpoint oxygen utilization rate below the POUR, in accordance with the magnitude of the ratio POUR/OUR, by manipulation of the duration and/or the flow of air of the aeration sequence and the biomass concentration in the second zone.

2. The method of claim 1, **characterised in that** up to 40% of the reactor volume is removed during an air-off sequence at a rate that avoids entraining settled solids within the second zone in the reactor.

3. The method of claim 1 or 2, **characterised in that** the net fluid oxidation reduction potential of the combined liquid stream passing to the second zone is between -150 mV and -200 mV as compared to a hydrogen reference electrode.

4. The method of any one of claims 1 to 3, wherein waste material up to 40% of the reactor volume is introduced into the first zone during a set aerated sequence whose duration is the total cycle time less the sum of a liquid separation and treated effluent removal air-off time sequence.

5. The method of any one of claims 1 to 4, **characterised in that** the oxidation reduction potential of segregated sludge in the second zone falls substantially to between -150 mV and -200 mV within 90 minutes into the air-off sequence.

6. The method of any one of claims 1 to 5, **characterised in that** the biomass in the second zone remains in motion for at least 10 minutes after interruption of the supply of air.

7. The method of any one of claims 1 to 6, **characterised in that** the values of dissolved oxygen concentration in the second zone are automatically measured and monitored in situ at intervals of 10 to 20 seconds after interruption of the supply of air.

8. The method of any one of claims 1 to 7, **characterised in that** the loading of solids concentration is up to 20 kg MLSS per square metre of reactor area.

9. The method of any one of claims 1 to 8, **characterised in that** the dissolved oxygen concentration of the biomass is measured to determine the oxygen utilisation rate.

10. The method of any one of claims 1 to 9, **characterised in that** the dissolved oxygen concentration in the second zone is controlled to less than 0.7 mg/L, average, for 75 per cent of the air-on time and to between 2 and 3 mg/L for the remaining air-on time period.

11. The method of any one of claims 1 to 10, **characterised in that** the waste material is treated using a micro-organism population acclimated to the waste material contaminants and their concentrations in the waste material, said micro-organism population including:
micro-organisms capable of removing carbohydrate type compounds,
nitrifying micro-organisms capable of converting ammonia nitrogen to at least nitrite nitrogen,
facultative micro-organisms capable of denitrifying nitrite,
facultative micro-organisms capable of reducing nitrate to nitrite nitrogen to nitrogen gas and
phosphorus removal micro-organisms capable of biologically removing available soluble phosphorus containing compounds.

12. The method of any one of claims 1 to 11, **characterised in that** the mixed liquor solids concentration in the second zone is sensed and recorded at the moment that the air supply to the reactor is terminated and the dissolved oxygen uptake rate is sensed, recorded and analysed following termination of the process oxygen supply.

13. The method of any one of claims 1 to 12, **characterised in that** the sensed process values are processed and used to determine:
- the waste sludge pumping time,
- the duration of the air-on sequence for the next cycle,
- the mass flow rate of air for the next cycle, and
- adjustment of the dissolved oxygen concentration set points, such that the process conditions are sufficient to maintain the set-point oxygen uptake rate in the second zone determined at the end of the previous aeration sequence.

14. The method of claim 13, **characterised in that** the sensed process values are processed to further determine
- the rate of change of oxygen increase at the commencement of the aeration sequence.

15. The method of any one of claims 1 to 14, **characterised in that** a pH correction is made to the influent wastewaters.

16. The method of any one of claims 1 to 15, **characterised in that** the dissolved oxygen uptake rate or measured potential (dissolved) oxygen uptake rate in the initial volume is at least 20 mg O₂/g VSS/hour.

17. The method of any one of claims 1 to 16, **characterised in that** the waste material is domestic, industrial, commercial wastewater, including human wastes, body washing wastewater, clothes washing wastewater, food preparation wastewater, and combinations thereof.

18. The method of any one of claims 1 to 17, **characterised in that** the potential oxygen uptake rate of the biomass in the second zone, as measured using a biosolids influent waste material mixture of 80% /20%, averages at three times the oxygen uptake rate of the biomass in the second zone as measured and calculated by the dissolved oxygen sensor on a daily basis.

19. An apparatus for treating waste material by controlling metabolic activity of micro-organisms of a single activated sludge biomass, to remove carbon, nitrogen and phosphorus containing components from the waste material, said apparatus comprising
- a two-zone reactor (1) operated with variable volume, the reactor being open to the atmosphere and comprising a first zone (3) having an unaerated reaction volume and, partially separated from the first zone in series connection, a second zone (4) having a cyclically aerated reaction volume and comprising means for introducing dissolved oxygen by controlled aeration, both zones having a common maximum top water level (7) and being in fluid communication for a flow of contents from the first to the second zone while at least the second zone (4) is being aerated,
- a receiving means to receive waste into the reactor, adapted to interrupt the flow of influent waste material into the first zone during a combined liquid separation and treated effluent removal sequence,
- transferring means (10) to transfer at least a part of the contents of the second zone to the first zone (3),
- an oxygen transfer means (6) for introducing air into the second zone,
- a control means for operating for operating sequences of the said equipment of the apparatus,
**characterised in that** the apparatus further includes:
- an instrument (13) for monitoring the concentration of biomass in the second zone,
- a detector (15) for monitoring a sludge blanket layer position in the second zone,
- a sensor (12) for monitoring the concentration of dissolved oxygen of the biomass, at a location within the waste material/microbial mix in the second zone or in a pipe through which biomass is pumped therefrom,
and the control means is adapted to determine a utilization rate of dissolved oxygen, to operate a sequence of aeration after completion of an effluent removal sequence, where during the aeration sequence introducing wastewater into the second zone, controlling the dissolved oxygen concentration to a value less than 3 mg/L while maintaining co-current nitrification and denitrification, and to compare a rate of use of dissolved oxygen by the biomass in the second zone (= oxygen uptake rate, OUR), measured at the end of an aeration sequence, to the potential oxygen utilization rate (POUR), as determined by the measurement of the oxygen uptake rate of activated sludge with an excess of soluble substrate, in order to adjust the OUR to a setpoint oxygen utilization rate below the POUR, in accordance with the magnitude of the ratio POUR/OUR, by manipulation of the duration and/or the flow of air of the aeration sequence and the biomass concentration in the second zone.

20. The apparatus of claim 19, **characterised in that** the loading of solids concentration is up to 20 kg MLSS per square metre of reactor area.

21. The apparatus of claim 19 or 20, **characterised by** attached growth media, contained as random pack media in the second zone fitted with means for varying aeration intensity.

22. The apparatus of any one of claims 19 to 21, **characterised in that** the reactor (1) comprises diffused aeration grids located at or towards the floor or base of the second or last zone.

23. The apparatus of claim 22, **characterised in that** the aeration grids are controlled by means of restricting the flow of air, such as a motor-operated control valves, which can be alternately closed and opened, or operated in unison according to a set program of air-on operation.

24. The apparatus of any one of claims 19 to 23, **characterised in that** the dissolved oxygen concentration sensor (12) is an electronic oxygen sensor able to measure the rate of change of dissolved oxygen concentration.

25. The apparatus of any one of claims 19 to 24, **characterised in that** the second zone (4) is more than 50 per cent of the total reactor volume.

26. The apparatus of any one of claims 19 to 25, **characterised in that** the reactor is formed as a slope-walled lagoon structure reactor having earthen, concrete-stabilised, membrane-lined or concrete retaining walls or a concrete-walled vessel or a structural steel vessel.

## Patentansprüche

1. Verfahren zur Behandlung von Abfallmaterial durch die Regelung der metabolischen Aktivität von Mikroorganismen einer einzelnen aktivierten Schlammbiomasse durch kontrollierte Luftzufuhr kombiniert mit intermittierenden Luftzufuhrzyklen und intermittierendem Dekantieren des behandelten Abwassers in einem Zwei-Stufen-Reaktor (1), der mit variablem Volumen betrieben wird. Besagter Reaktor ist zur Umgebung offen und besteht aus einer ersten Stufe (3) mit einem nicht belüfteten Reaktionsvolumen und, teilweise von der ersten Reaktionsstufe in einer Serienanordnung getrennt, einer zweiten Stufe (4) mit einem zyklisch belüfteten Reaktionsvolumen und mit Mitteln zur Einleitung von gelöstem Sauerstoff durch kontrollierte Belüftung. Beide Stufen haben einen gemeinsamen maximalen oberen Wasserstand (7),
um Komponenten aus dem Abfallmaterial zu entfernen, die organischen Kohlenstoff, Stickstoff und Phosphor enthalten. Das Verfahren umfasst folgendes:
- Einleiten des Abfallmaterials in den Reaktor (1),
- Überleiten von wenigstens einem Teil des Inhalts der zweiten oder letzten Stufe in die erste Stufe (3) zur Zumischung und Reaktion darin mit einströmendem unbehandeltem Abfallmaterial, und Strömen des Inhalts von der ersten Stufe in die zweite Stufe, wobei besagtes Überleiten stattfindet, während wenigstens die zweite Stufe (4) belüftet wird und
- Unterbrechen des Abfallmaterialstroms in die erste Stufe (3), während sich ein oben schwimmender Überstand bildet und behandeltes Abwasser aus der zweiten Stufe entfernt wird,
**dadurch gekennzeichnet, dass** das Verfahren folgendes umfasst
- Überwachen (12) der Konzentration des gelösten Sauerstoffs der Biomasse,
- Überwachen (13) der Konzentration der Biomasse in der zweiten Stufe
- Überwachen (15) des Pegels einer Schlammdeckschicht in der zweiten Stufe,
worin die Konzentration des gelösten Sauerstoffs in der Biomasse an einer Stelle innerhalb des Abfallmaterials/der Mikrobenmischung in der zweiten Stufe oder in einem Rohr, durch das die Biomasse von da gepumpt wird, überwacht und eine Nutzungsrate des gelösten Sauerstoffs bestimmt wird,
und worin nach dem Abschluss einer Abwasserentfernungssequenz eine Belüftungssequenz stattfindet, während derer unter Regelung der Konzentration des gelösten Sauerstoffs auf einen Wert von weniger als 3 mg/L, während gleichzeitige Nitrifikation und Denitrifikation beibehalten werden, Abfallmaterial in die zweite Stufe eingeleitet wird,
worin die Nutzungsrate des gelösten Sauerstoffs von der Biomasse in der zweiten Stufe (=Sauerstoffnutzungsrate, SNR) am Ende der Belüftungssequenz gemessen wird, die gemessene Rate mit der potenziellen Sauerstoffnutzungsrate (PSNR) verglichen wird, wie durch die Messung der SNR des aktivierten Schlamms mit einem Überschuss an löslichem Substrat bestimmt, um die SNR auf eine Sollwert-Sauerstoffnutzungsrate unterhalb der PSNR in Übereinstimmung mit der Größe des Verhältnisses PSNR/SNR durch Manipulation der Dauer und/oder des Luftstroms der Belüftungssequenz und der Biomassenkonzentration in der zweiten Stufe einzustellen.

2. Verfahren nach Anspruch 1, **dadurch gekennzeichnet, dass** bis zu 40% des Reaktorvolumens während einer Sequenz ohne Belüftung mit einer Rate entfernt werden, die verhindert, dass abgesetzte Feststoffe innerhalb der zweiten Stufe des Reaktors mitgerissen werden.

3. Verfahren nach Anspruch 1 oder 2, **dadurch gekennzeichnet, dass** das Nettoflüssigkeits-Oxidationsreduktionspotenzial des kombinierten Flüssigkeitsstroms, der in die zweite Stufe strömt, im Vergleich mit einer Wasserstoffreferenzelektrode zwischen -150 mV und -200 mV liegt.

4. Verfahren nach einem der Ansprüche 1 bis 3, worin Abfallmaterial bis zu 40% des Reaktorvolumens während einer vorgegebenen belüfteten Sequenz, deren Dauer die Gesamtzykluszeit abzüglich der Summe einer Zeitsequenz ohne Belüftung aus Flüssigkeitsseparation und Entfernung des behandelten Abwassers ist, in die erste Stufe eingeleitet werden.

5. Verfahren nach einem der Ansprüche 1 bis 4, **dadurch gekennzeichnet, dass** das Oxidationsreduktionspotenzial des abgesonderten Schlamms in der zweiten oder letzten Stufe innerhalb von 90 Minuten nach Beginn der Sequenz ohne Belüftung wesentlich auf zwischen -150 mV und -200 mV abfällt.

6. Verfahren nach einem der Ansprüche 1 bis 5, **dadurch gekennzeichnet, dass** die Biomasse in der zweiten Stufe mindestens 10 Minuten nach der Unterbrechung der Luftzufuhr in Bewegung bleibt.

7. Verfahren nach einem der Ansprüche 1 bis 6, **dadurch gekennzeichnet, dass** die Konzentrationswerte des gelösten Sauerstoffs in der zweiten oder letzten Stufe in Intervallen von 10 bis 20 Sekunden nach der Unterbrechung der Luftzufuhr in situ automatisch gemessen und überwacht werden.

8. Verfahren nach einem der Ansprüche 1 bis 7, **dadurch gekennzeichnet, dass** die Beladung der Feststoffkonzentration mit bis zu 30 kg MLSS (Schlammkonzentration im belebten Schlamm) pro Quadratmeter Reaktorfläche erfolgt.

9. Verfahren nach einem der Ansprüche 1 bis 8, **dadurch gekennzeichnet, dass** die Konzentration des gelösten Sauerstoffs der Biomasse gemessen wird, um die Sauerstoffnutzungsrate zu bestimmen.

10. Verfahren nach einem der Ansprüche 1 bis 9, **dadurch gekennzeichnet, dass** die Konzentration des gelösten Sauerstoffs in der zweiten oder letzten Stufe auf weniger als durchschnittlich 0,7 mg/L während 75 Prozent der Zeit mit Belüftung und auf zwischen 2 bis 3 mg/K während der verbleibenden Zeitspanne mit Belüftung geregelt wird.

11. Verfahren nach einem der Ansprüche 1 bis 10, **dadurch gekennzeichnet, dass** das Abfallmaterial mit Hilfe einer Mikroorganismenpopulation behandelt wird, die sich an die Abfallmaterialverseuchungsstoffe und ihre Konzentrationen im Abfallmaterial angepasst hat, und besagte Mikroorganismenpopulation folgendes umfasst:
Mikroorganismen, die Kohlehydratverbindungen entfernen können,
nitrifizierende Mikroorganismen, die in der Lage sind, Ammoniakstickstoff mindestens in Nitritstickstoff umzuwandeln,
fakultative Mikroorganismen, die Nitrit denitrifizieren können,
fakultative Mikroorganismen, die Nitrat zu Nitritstickstoff zu Stickstoffgas reduzieren können und
Phosphorentfernungs-Mikroorganismen, die vorhandene lösliche, Phosphor enthaltende Verbindungen biologisch entfernen können.

12. Verfahren nach einem der Ansprüche 1 bis 11, **dadurch gekennzeichnet, dass** die Schlammkonzentration im belebten Schlamm in der zweiten Stufe zu dem Zeitpunkt gemessen und aufgezeichnet wird, zu dem die Luftzufuhr zum Reaktor beendet wird und die Nutzungsrate des gelösten Sauerstoffs nach der Beendigung der Prozesssauerstoffversorgung gemessen, aufgezeichnet und analysiert wird.

13. Verfahren nach einem der Ansprüche 1 bis 12, **dadurch gekennzeichnet, dass** die gemessenen Prozesswerte verarbeitet und zur Bestimmung der folgenden Größen benutzt werden:
- die Abfallschlamm-Pumpzeit,
- die Dauer der Belüftungssequenz für den nächsten Zyklus,
- die Massendurchflussrate der Luft für den nächsten Zyklus und
- die Einstellung der Sollwerte für die Konzentration des gelösten Sauerstoffs,
so dass die Prozessbedingungen ausreichend sind, um die Sollwert-Sauerstoffnutzungsrate in der zweiten Stufe beizubehalten, die am Ende der vorherigen Belüftungssequenz bestimmt worden ist.

14. Verfahren nach Anspruch 13, **dadurch gekennzeichnet, dass** die gemessenen Prozesswerte weiter verarbeitet werden, um
- die Änderungsrate des Sauerstoffanstiegs zu Beginn der Belüftungssequenz zu bestimmen.

15. Verfahren nach einem der Ansprüche 1 bis 14, **dadurch gekennzeichnet, dass** eine pH-Wert-Korrektur an den zufließenden Abwässern vorgenommen wird.

16. Verfahren nach einem der Ansprüche 1 bis 15, **dadurch gekennzeichnet, dass** die Nutzungsrate des gelösten Sauerstoffs oder die gemessene potenzielle Nutzungsrate des (gelösten) Sauerstoffs in dem anfänglichen Volumen mindestens 20 mg O₂/g VSS/Stunde beträgt.

17. Verfahren nach einem der Ansprüche 1 bis 16, **dadurch gekennzeichnet, dass** das Abfallmaterial aus Haushalts-, Industrie- und kommerziellem Abwasser einschließlich von menschlichem Abfall, Körperpflegeabwasser, Abwasser aus dem Waschen von Kleidern, Lebensmittelzubereitungsabwasser und Kombinationen daraus besteht.

18. Verfahren nach einem der Ansprüche 1 bis 17, **dadurch gekennzeichnet, dass** die maximale potenzielle Sauerstoffnutzungsrate der Biomasse in der zweiten Stufe, wie mit Hilfe einer Mischung aus Biofeststoffen / zufließendem Abfallmaterial von 80% / 20% gemessen, durchschnittlich drei Mal so groß wie die Sauerstoffnutzungsrate der Biomesse in der zweiten Stufe ist, wie täglich von dem Sensor für gelösten Sauerstoff gemessen und berechnet.

19. Apparat für die Behandlung von Abfallmaterial durch die Regelung der metabolischen Aktivität von Mikroorganismen einer einzigen aktivierten Schlammbiomasse, um Komponenten aus dem Abfallmaterial zu entfernen, die Kohlenstoff, Stickstoff und Phosphor enthalten, wobei besagter Apparat aus Folgendem besteht:
- einem Zwei-Stufen-Reaktor (1), der mit variablem Volumen betrieben wird, wobei der Reaktor zur Umgebung offen ist und eine erste Stufe (3) mit einem nicht belüfteten Reaktionsvolumen und, teilweise von der ersten Stufe in Serienanordnung getrennt, eine zweite Stufe (4) mit einem zyklisch belüfteten Reaktionsvolumen und mit Mitteln zur Einleitung von gelöstem Sauerstoff durch kontrollierte Belüftung umfasst. Beide Stufen besitzen einen gemeinsamen maximalen oberen Wasserstand (7) und stehen für einen Flüssigkeitsstrom des Inhalts der ersten in die zweite Stufe in Verbindung, während mindestens die zweite Stufe (4) belüftet wird,
- einem Empfangsmittel, um Abfall in den Reaktor aufzunehmen, so angepasst, dass der Fluss des zuströmenden Abfallmaterials in die erste Stufe während einer kombinierten Sequenz aus Flüssigkeitstrennung und Entfernung des behandelten Abwassers unterbrochen werden kann,
- Überleitungsmitteln (10) zur Überleitung von mindestens einem Teil des Inhalts der zweiten Stufe in die erste Stufe (3),
- einem Sauerstoffübertragungsmittel (6) zum Einleiten von Luft in die zweite Stufe,
- einem Regelmittel zum Betrieb der Betriebssequenzen der besagten Anlage des Apparats,
**dadurch gekennzeichnet, dass** der Apparat außerdem folgendes umfasst:
- ein Gerät (13) zur Überwachung der Konzentration der Biomasse in der zweiten Stufe,
- einen Detektor (15) zur Überwachung einer Schlammdeckschichtposition in der zweiten Stufe,
- einen Sensor (12) zur Überwachung der Konzentration von gelösten Sauerstoff der Biomasse an einer Stelle innerhalb der Mischung aus Abfallmaterial und Mikroben in der zweiten oder letzten Stufe oder in einem Rohr, durch das die Biomasse von da gepumpt wird,
und das Regelmittel ist so angepasst, dass eine Nutzungsrate des gelösten Sauerstoffs bestimmt wird, um eine Belüftungssequenz nach Abschluss einer Abwasserentfernungssequenz durchzuführen, wobei während der Belüftungssequenz Abwasser in die zweite Stufe eingeleitet wird, die Konzentration des gelösten Sauerstoffs auf einen Wert von weniger als 3 mg/L unter Beibehaltung von gleichzeitiger Nitrifikation und Denitrifikation geregelt wird, und um eine Nutzungsrate des gelösten Sauerstoffs von der Biomasse in der zweiten Stufe (= Sauerstoffnutzungsrate, SNR), gemessen am Ende der Belüftungssequenz, mit der potenziellen Sauerstoffnutzungsrate (PSNR), wie durch Messung der Sauerstoffnutzungsrate des aktivierten Schlamms mit einem Überschuss an löslichem Substrat bestimmt, zu vergleichen, um die SNR auf eine Sollwert-Sauerstoffnutzungsrate unterhalb der PSNR in Übereinstimmung mit der Größe des Verhältnisses PSNR/SNR durch Manipulation der Dauer und/oder des Luftstroms der Belüftungssequenz und der Biomassenkonzentration in der zweiten Stufe einzustellen.

20. Apparat nach Anspruch 19, **dadurch gekennzeichnet, dass** die Beladung der Feststoffkonzentration bis zu 20 kg MLSS pro Quadratmeter Reaktorfläche beträgt.

21. Apparat nach Anspruch 19 oder 20, durch eingebaute Wachstumsmedien **gekennzeichnet**, die als ungeordnet gepackte Medien in der zweiten Stufe mit Mitteln zur Variierung der Belüftungsintensität enthalten sind.

22. Apparat nach einem der Ansprüche 19 bis 21, **dadurch gekennzeichnet, dass** der Reaktor (1) diffundierte Belüftungsgitter umfasst, die sich am oder nahe am Boden oder an der Basis der zweiten Stufe befinden.

23. Apparat nach Anspruch 22, **dadurch gekennzeichnet, dass** die Belüftungsgitter durch Mittel zur Einschränkung des Luftstroms, wie motorbetriebene Regelventile, gesteuert werden, die abwechselnd geschlossen oder geöffnet werden können, oder gemeinsam gemäß eines vorgegebenen Belüftungsprogramms betrieben werden können.

24. Apparat nach einem der Ansprüche 19 bis 23, **dadurch gekennzeichnet, dass** der Konzentrationssensor (12) für den gelösten Sauerstoff ein elektronischer Sauerstoffsensor ist, der die Änderungsrate der Konzentration des gelösten Sauerstoffs messen kann.

25. Apparat nach einem der Ansprüche 19 bis 24, **dadurch gekennzeichnet, dass** die zweite Stufe (4) über 50% des gesamten Reaktorvolumens ausmacht.

26. Apparat nach einem der Ansprüche 19 bis 25, **dadurch gekennzeichnet, dass** der Reaktor als Schlammteichstruktur mit schrägen Wänden und irdenen, betonverstärkten, membranausgekleideten oder Betonstauwänden oder als Behälter mit Betonwänden oder als Stahlbaubehälter gebaut ist.

## Revendications

1. Méthode de traitement des déchets par contrôle de l'activité métabolique des micro-organismes d'une unique biomasse de boue activée, par aération contrôlée associée à un cycle d'aération intermittente et une décantation intermittente de l'effluent traité, dans un réacteur à deux zones (1) opéré à volume variable, le dit réacteur étant ouvert sur l'atmosphère et constitué d'une première zone (3) ayant un volume non aéré de réaction et, séparé partiellement de la première zone de réaction en un accouplement en série, une deuxième zone (4) ayant un volume cycliquement aéré de réaction et dotée de moyens pour introduire l'oxygène dissout par une aération contrôlée, les deux zones ayant un niveau d'eau supérieure maximum commun (7)),
pour extraire les éléments contenant du charbon organique, de l'azote et du phosphore des déchets,
la méthode consistant à :
- faire entrer les déchets dans le réacteur (1),
- transférer au moins une partie du contenu de la deuxième ou dernière zone à la première zone (3) pour mélange et réaction à l'intérieur avec les déchets non traités entrant, et
circulation du contenu de la première zone à la deuxième zone, le dit transfert ayant lieu au moment où la deuxième zone (4) au moins est aérée, et,
- interrompre le flux des déchets dans la première zone (3), au moment où un surnageant se forme et que l'effluent traité est enlevé de la deuxième zone,
**caractérisé par le fait que** la méthode comprend
- surveillance (12) de la concentration de l'oxygène dissout dans la biomasse,
- surveillance (13) de la concentration de la biomasse dans la deuxième zone et
- surveillance (15) du niveau de la couche du lit de boue dans la deuxième zone,
dans laquelle la concentration d'oxygène dissout dans la biomasse est surveillée en un emplacement au coeur du mélange matières résiduaires/microbiennes dans la deuxième zone ou dans un tuyau d'où et par lequel la biomasse est pompée, et un taux de consommation d'oxygène dissout est déterminé,
et dans laquelle après achèvement d'une séquence d'enlèvement d'un effluent, une phase d'aération a lieu pendant laquelle les déchets sont introduits dans la deuxième zone, contrôlant la concentration d'oxygène dissout à une valeur inférieure à 3mg/L tout en maintenant la nitrification et dénitrification à co-courant,
dans laquelle le taux d'utilisation d'oxygène dissout par la biomasse dans la deuxième zone (= taux de consommation d'oxygène, OUR) est mesuré à la fin d'une phase d'aération, le taux mesuré étant comparé au taux de consommation d'oxygène potentielle (POUR), comme il est déterminé par la mesure du OUR de la boue activée avec un excès de substrat soluble, afin d'ajuster le OUR à un taux de consommation d'oxygène au point de consigne inférieur au POUR, en conformité avec l'amplitude du ratio POUR/OUR, par manipulation de la durée et/ou du flux d'air de la phase d'aération et la concentration de biomasse dans la deuxième zone.

2. La méthode de la revendication 1, **caractérisée par le fait que** jusqu'à 40% du volume du réacteur est enlevé pendant une phase de non aération à un taux évitant d'entraîner la formation de décantat à l'intérieur de la deuxième zone dans le réacteur.

3. La méthode de la revendication 1 ou 2, **caractérisée par le fait que** le potentiel de diminution d'oxydation du fluide net du courant liquide combiné passant à la deuxième zone se situe entre -150 mV et -200 mV en comparaison avec une électrode de référence à hydrogène.

4. La méthode d'une des revendications 1 à 3, dans laquelle les déchets composant jusqu'à 40% du volume du réacteur sont introduits dans la première zone pendant une phase aérée déterminée dont la durée correspond au temps total du cycle moins la somme d'une séparation du liquide et une phase de non aération d'enlèvement de l'effluent traité.

5. La méthode d'une des revendications 1 à 4, **caractérisée par le fait que** le potentiel de diminution d'oxydation de la boue isolée dans la deuxième ou la dernière zone chute considérablement entre -150 mV et -200 mV dans les 90 minutes de la phase de non-aération.

6. La méthode d'une des revendications 1 à 5, **caractérisée par le fait que** la biomasse dans la deuxième zone reste en mouvement pendant au moins 10 minutes après interruption de l'alimentation en air.

7. La méthode d'une des revendications 1 à 6, **caractérisée par le fait que** les valeurs de concentration d'oxygène dissout dans la deuxième ou la dernière zone sont automatiquement mesurées et surveillées in situ à intervalles de 10 à 20 secondes après interruption de l'alimentation en air.

8. La méthode d'une des revendications 1 à 7, **caractérisée par le fait que** la charge de concentration en solide est jusqu'à 20 kg MLSS par mètre carré de zone du réacteur.

9. La méthode d'une des revendications 1 à 8, **caractérisée par le fait que** la concentration d'oxygène dissout de la biomasse est mesurée pour déterminer le taux de consommation d'oxygène.

10. La méthode d'une des revendications 1 à 9, **caractérisée par le fait que** la concentration d'oxygène dissout dans la deuxième ou la dernière zone est maintenue à moins de 0,7mg/L, en moyenne, pour 75 pour cent du temps d'aération et à entre 2 et 3 mg/L pour la période restante d'aération.

11. La méthode d'une des revendications 1 à 10, **caractérisée par le fait que** les déchets sont traités à l'aide de la population d'un micro-organisme acclimaté aux polluants des déchets et à leurs concentrations dans les déchets, la dite population du micro-organisme comprenant :
des micro-organismes capables d'enlever les composés de type hydrate de carbone,
des micro-organismes nitrifiants capables de convertir l'azote ammoniacal en au moins de l'azote nitrite,
des micro-organismes facultatifs capables de dénitrifier le nitrite,
des micro-organismes facultatifs capables de dégrader le nitrate en azote nitrite en azote gazeux et
des micro-organismes d'enlèvement du phosphore capables d'enlever biologiquement le phosphore soluble disponible contenu dans les composés.

12. La méthode d'une des revendications 1 à 11, **caractérisée par le fait que** la concentration de matières solides du liquide mélangé dans la deuxième zone est détectée et enregistrée au moment de l'arrêt de l'alimentation en air vers le réacteur et le taux de consommation d'oxygène dissout est détecté, enregistré et analysé après arrêt de l'alimentation en oxygène du processus.

13. La méthode d'une des revendications 1 à 12, **caractérisée par le fait que** les valeurs détectées dans le processus sont traitées et utilisées pour déterminer :
- le moment du pompage de la boue résiduaire,
- la durée de la phase d'aération pour le prochain cycle,
- le débit-masse de l'air pour le prochain cycle, et
- le réglage des points de consigne de la concentration d'oxygène dissout,
de telle sorte que les conditions du processus soient suffisantes pour maintenir le taux de consommation d'oxygène au point de consigne dans la deuxième zone déterminée à la fin de la phase d'aération précédente.

14. La méthode de la revendication 13, **caractérisée par le fait que** les valeurs détectées dans le processus sont traitées pour déterminer en outre :
- le taux de changement de l'augmentation de l'oxygène au début de la phase d'aération.

15. La méthode d'une des revendications 1 à 14, **caractérisée par le fait qu'**une correction du pH est effectuée aux eaux usées affluentes.

16. La méthode d'une des revendications 1 à 15, **caractérisée par le fait que** le taux de consommation d'oxygène ou le taux de consommation d'oxygène (dissout) potentielle mesuré dans le volume initiale est d'au moins 20 mg O₂/g VSS/heure.

17. La méthode d'une des revendications 1 à 16, **caractérisée par le fait que** les déchets sont des eaux usées domestiques, industrielles, commerciales, y compris les déchets d'origine humaine, les eaux de bains usées, les eaux de lessive usées, les eaux de cuisine usées et leurs associations.

18. La méthode d'une des revendications 1 à 17, **caractérisée par le fait que** le taux de consommation d'oxygène potentielle maximum de la biomasse dans la deuxième zone, comme il a été mesuré à l'aide du mélange de déchets sous forme de biosolides/affluents de 80% / 20%, moyennes a trois fois supérieure au taux de consommation d'oxygène de la biomasse dans la deuxième zone comme il a été mesuré et calculé par le capteur d'oxygène dissout sur une base quotidienne.

19. Un dispositif pour le traitement des déchets par contrôle de l'activité métabolique des micro-organismes d'une unique biomasse de boue activée, pour enlever les éléments des déchets contenant du charbon, de l'azote et du phosphore, le dit dispositif comprenant
- un réacteur à deux zones (1) opéré à volume variable, le dit réacteur étant ouvert sur l'atmosphère et constitué d'une première zone (3) ayant un volume non aéré de réaction et, séparé partiellement de la première zone en un accouplement en série, une deuxième zone (4) ayant un volume cycliquement aéré de réaction et dotée de moyens pour introduire l'oxygène dissout par une aération contrôlée, les deux zones ayant un niveau d'eau supérieure maximum commun (7) et étant en communication liquide pour une circulation du contenu de la première zone à la deuxième zone tandis que la deuxième zone (4) au moins est aérée,
- un moyen de réception pour recevoir les déchets dans le réacteur, adapté pour interrompre le flux des déchets sous forme d'affluent dans la première zone pendant une phase combinée de séparation du liquide et d'enlèvement de l'effluent traité.
- un moyen de transfert (10) pour transférer au moins une partie du contenu de la deuxième zone à la première zone (3),
- un moyen de transfert d'oxygène (6) pour introduire l'air dans la deuxième zone,
- un moyen de commande pour opérer les phases du dit équipement du dispositif,
**caractérisé par le fait que** le dispositif comprend en outre :
- un instrument (13) pour surveiller la concentration de la biomasse dans la deuxième zone,
- un détecteur (15) pour surveiller la position de la couche du lit de boue dans la deuxième zone,
- un capteur (12) pour surveiller la concentration d'oxygène dissout dans la biomasse, en un emplacement au coeur du mélange matières résiduaires/microbiennes dans la deuxième zone ou dans la dernière zone ou dans un tuyau d'où et par lequel la biomasse est pompée,
et le moyen de contrôle est adapté pour déterminer un taux de consommation de l'oxygène dissout, pour opérer une phase d'aération après achèvement d'une phase d'enlèvement d'un effluent, où pendant la phase d'aération les eaux usées sont introduites dans la deuxième zone, contrôlant la concentration d'oxygène dissout à une valeur inférieure à 3mg/L tout en maintenant la nitrification et dénitrification à co-courant,et pour comparer un taux d'utilisation d'oxygène dissout par la biomasse dans la deuxième zone ( = taux de consommation d'oxygène, OUR), mesuré à la fin d'une phase d'aération, en référence au taux de consommation d'oxygène potentielle (POUR), comme il est déterminé par la mesure du taux de consommation d'oxygène de la boue activée avec un excès de substrat soluble, afin d'ajuster le OUR à un taux de consommation d'oxygène au point de consigne inférieur au POUR, en conformité avec l'amplitude du ratio POUR/OUR, par manipulation de la durée et/ou du flux d'air de la phase d'aération et la concentration de biomasse dans la deuxième zone.

20. Le dispositif de la revendication 19, **caractérisé par le fait que** la charge de concentration en solide est jusqu'à 20 kg MLSS par mètre carré de zone du réacteur.

21. Le dispositif de la revendication 19 ou 20, **caractérisé par le fait que** le milieu de croissance fixé est contenu en tant que milieu condensé aléatoire dans la deuxième zone équipée de moyens pour varier l'intensité de l'aération.

22. Le dispositif d'une des revendications 19 à 21, **caractérisé par le fait que** le réacteur comprend des grilles d'aération diffuse situées sur ou vers le sol ou la base de la deuxième zone.

23. Le dispositif de la revendication 22, **caractérisé par le fait que** les grilles d'aération sont contrôlées par restriction du flux d'air, comme des soupapes de commande opérées par moteur, qui peuvent être fermées et ouvertes alternativement, ou opérées en unisson selon un programme déterminé d'opération d'aération.

24. Le dispositif d'une des revendications 19 à 23, **caractérisé par le fait que** le capteur de concentration d'oxygène dissout (12) est un capteur d'oxygène électronique capable de mesurer le taux de changement de la concentration en oxygène dissout.

25. Le dispositif d'une des revendications 19 à 24, **caractérisé par le fait que** la deuxième zone (4) est supérieure de 50 pour cent au volume total du réacteur.

26. Le dispositif d'une des revendications 19 à 25, **caractérisé par le fait que** le réacteur est formé d'une structure en forme de lagon avec parois inclinés, ayant des murs de terre, des parois avec des renforcements en béton, des parois garnis de membranes ou des murs de retenue en béton ou un bassin aux parois bétonnées ou un bassin en acier de construction.
